(19) Europäisches Patentamt
European Patent Office
Office européen des brevets

(11) **EP 4 439 948 A1**

(12) **EUROPEAN PATENT APPLICATION**

(43) Date of publication:
**02.10.2024 Bulletin 2024/40**

(21) Application number: **24166867.2**

(22) Date of filing: **27.03.2024**

(51) International Patent Classification (IPC):
**H02M 1/00** (2006.01)     **H02M 1/32** (2007.01)
**H02M 7/48** (2007.01)

(52) Cooperative Patent Classification (CPC):
**H02M 7/48; H02M 1/0025; H02M 1/32;
H02M 1/325; H02M 1/327**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023   CN 202310372514**

(71) Applicant: **Huawei Digital Power Technologies
Co., Ltd.
Shenzhen, Guangdong 518043 (CN)**

(72) Inventors:
• **YAO, Yuan
  Shenzhen, 518043 (CN)**
• **YU, Xinyu
  Shenzhen, 518043 (CN)**
• **XIN, Kai
  Shenzhen, 518043 (CN)**

(74) Representative: **Epping - Hermann - Fischer
Patentanwaltsgesellschaft mbH
Schloßschmidstraße 5
80639 München (DE)**

(54) **POWER CONVERSION APPARATUS AND DEVICE PROTECTION METHOD**

(57)     Embodiments of this application provide a power conversion apparatus and a device protection method. The power conversion apparatus includes a power conversion unit, a sampling unit, and a controller. The power conversion unit is connected to the controller. The sampling unit is separately connected to the power conversion unit and the controller, and is configured to detect a temperature and a voltage of the power conversion apparatus The controller is configured to switch an operating protection mode of the power conversion apparatus based on the temperature and the voltage of the power conversion apparatus. The operating protection mode includes a low-level protection mode and a high-level protection mode. The solution provided in embodiments of this application can reduce a possibility of avalanche breakdown of the power conversion apparatus, so that a possibility of an operation failure of the power conversion apparatus can be reduced.

FIG. 3

**EP 4 439 948 A1**

## Description

## TECHNICAL FIELD

Embodiments of this application relate to the field of electric power technologies, and in particular, to a power conversion apparatus and a device protection method.

## BACKGROUND

Power electronic equipment includes equipment whose main functional element is a power electronic device (for example, a semiconductor device). A good operating status of the semiconductor device is one of basic conditions for ensuring normal operation of the power electronic equipment. A voltage borne at both ends of a device needs to be within a breakdown voltage range allowed by the device. Otherwise, there is a risk of avalanche breakdown. If no processing is performed, thermal breakdown generated through accumulation may cause irreversible damage to the device. Consequently, the equipment cannot operate normally.

During initial design, a device with an appropriate pressure resistance level may be selected by evaluating an operating condition and a voltage level of the equipment, to ensure that a voltage at both ends of the device does not exceed a breakdown voltage of the device during operation, so as to avoid avalanche breakdown. However, when operating conditions of the equipment are complex, a large current change rate at both ends of the device may generate a high voltage at both ends of the device. Such a transient state may cause the avalanche breakdown of the equipment. In addition, the breakdown voltage that the device withstands varies with an external temperature, which further increases a risk of the avalanche breakdown of the equipment.

Currently, only some factors are considered in most of protection policies for devices, resulting in incomprehensive coverage of operating conditions. This increases a possibility of avalanche breakdown of the devices.

## SUMMARY

Embodiments of this application provide a power conversion apparatus and a device protection method. Various factors are considered, and operating conditions are covered more comprehensively. This can reduce a possibility of avalanche breakdown of the power conversion apparatus, so that a possibility of an operation failure of the power conversion apparatus can be reduced.

According to a first aspect, a power conversion apparatus is provided, including a power conversion unit, a sampling unit, and a controller. The power conversion unit is connected to the controller. The sampling unit is separately connected to the power conversion unit and the controller, and is configured to detect a temperature and a voltage of the power conversion apparatus. The controller is configured to switch an operating protection mode of the power conversion apparatus based on the temperature and the voltage of the power conversion apparatus. The operating protection mode includes a low-level protection mode and a high-level protection mode. The controller is configured to: in the low-level protection mode, control an output current of the power conversion apparatus to be less than or equal to a first current value, control an overcurrent protection current of the power conversion apparatus to be a second current value, or control an output current of the power conversion apparatus to be less than or equal to a first current value and an overcurrent protection current of the power conversion apparatus to be a second current value. The controller is configured to: in the high-level protection mode, control an output current of the power conversion apparatus to be less than or equal to a third current value, control an overcurrent protection current of the power conversion apparatus to be a fourth current value, or control an output current of the power conversion apparatus to be less than or equal to a third current value and an overcurrent protection current of the power conversion apparatus to be a fourth current value, where the third current value is less than a first current value, and the fourth current value is less than a second current value.

In the solution provided in an embodiment of this application, when the operating protection mode of the power conversion apparatus is switched in this application, two factors, namely, the voltage and the temperature, are considered, and operating conditions are covered more comprehensively. This can reduce a possibility of avalanche breakdown of the power conversion apparatus, so that a possibility of an operation failure of the power conversion apparatus can be reduced.

With reference to the first aspect, in a first possible implementation, the controller is specifically configured to: if the voltage is less than a first voltage threshold, switch the power conversion apparatus to the low-level protection mode; or if the voltage is greater than or equal to a first voltage threshold, switch the operating protection mode of the power conversion apparatus based on the voltage, a second voltage threshold, and the temperature, where the second voltage threshold is greater than the first voltage threshold.

In the solution provided in an embodiment of this application, because the second voltage threshold is greater than the first voltage threshold, when it is determined that the voltage of the power conversion apparatus is greater than the first voltage threshold, the operating protection mode of the power conversion apparatus can be further switched based on the voltage, the second voltage threshold, and the temperature. This can ensure normal operation of the power conversion apparatus as much as possible, and reduce the possibility of the avalanche breakdown of the power conversion apparatus.

With reference to the first possible implementation of the first aspect, in a second possible implementation, the controller is specifically configured to: if the voltage is less than the second voltage threshold, maintain the power conversion apparatus in a present operating protection mode; or if the voltage is greater than or equal to the second voltage threshold, switch the operating protection mode of the power conversion apparatus based on the temperature, a first temperature threshold, a second temperature threshold, and the output current of the power conversion apparatus. In the solution provided in an embodiment of this application, a relationship between the voltage of the power conversion apparatus and the second voltage threshold is determined, and the operating protection mode of the power conversion apparatus is switched or the power conversion apparatus is maintained in the present operating protection mode based on a determining result. This can ensure the normal operation of the power conversion apparatus as much as possible, and reduce the possibility of the avalanche breakdown of the power conversion apparatus. In addition, in some cases in which the voltage is less than the second voltage threshold or the voltage is greater than the second voltage threshold, the controller can maintain the power conversion apparatus in the present operating protection mode. This can stabilize a status of the power conversion apparatus, and reduce impact on the power conversion apparatus. With reference to the second possible implementation of the first aspect, in a third possible implementation, the controller is specifically configured to: if the temperature is less than the first temperature threshold, maintain the power conversion apparatus in the present operating protection mode or switch the power conversion apparatus to the high-level protection mode based on the temperature and the second temperature threshold, where the second temperature threshold is less than the first temperature threshold; or if the temperature is greater than or equal to the first temperature threshold, switch the power conversion apparatus to the low-level protection mode or the high-level protection mode based on the output current of the power conversion apparatus.

In the solution provided in an embodiment of this application, a relationship between the temperature of the power conversion apparatus and the first temperature threshold is determined, and the operating protection mode of the power conversion apparatus is switched or the power conversion apparatus is maintained in the present operating protection mode based on a determining result. This can ensure the normal operation of the power conversion apparatus as much as possible, and reduce the possibility of the avalanche breakdown of the power conversion apparatus.

With reference to the third possible implementation of the first aspect, in a fourth possible implementation, the controller is specifically configured to: if the temperature is less than the second temperature threshold, switch the power conversion apparatus to the high-level protection mode; or if the temperature is greater than or equal to the second temperature threshold, maintain the power conversion apparatus in the present operating protection mode.

In the solution provided in an embodiment of this application, a relationship between the temperature of the power conversion apparatus and the second temperature threshold is determined, and the power conversion apparatus is switched to the high-level protection mode or the power conversion apparatus is maintained in the present operating protection mode based on a determining result. This can ensure the normal operation of the power conversion apparatus as much as possible, and reduce the possibility of the avalanche breakdown of the power conversion apparatus. In addition, when the temperature of the power conversion apparatus is greater than or equal to the second temperature threshold, the controller can maintain the power conversion apparatus in the present operating protection mode. This can stabilize the status of the power conversion apparatus, and reduce the impact on the power conversion apparatus.

With reference to the first aspect, in a fifth possible implementation, the controller is specifically configured to: if the temperature is greater than or equal to a first temperature threshold, switch the power conversion apparatus to the low-level protection mode or the high-level protection mode based on the output current of the power conversion apparatus; or if the temperature is less than a first temperature threshold, switch the operating protection mode of the power conversion apparatus based on the temperature and a second temperature threshold, where the second temperature threshold is less than the first temperature threshold.

In the solution provided in an embodiment of this application, a relationship between the temperature of the power conversion apparatus and the first temperature threshold is determined, and the operating protection mode of the power conversion apparatus is switched based on a determining result. This can ensure normal operation of the power conversion apparatus as much as possible, and reduce the possibility of the avalanche breakdown of the power conversion apparatus.

With reference to the fifth possible implementation of the first aspect, in a sixth possible implementation, the controller is specifically configured to: if the temperature is less than the second temperature threshold, switch the operating protection mode of the power conversion apparatus based on the voltage, a first voltage threshold, a second voltage threshold, and the output current of the power conversion apparatus; or if the temperature is greater than or equal to the second temperature threshold, maintain the power conversion apparatus in a present operating protection mode. In the solution provided in an embodiment of this application, a relationship between the temperature of the power conversion apparatus and the second temperature threshold is determined, and the operating protection mode of the power conversion apparatus is switched or the power conversion apparatus is maintained in the present operating protection mode based on a determining result. This can ensure the normal operation of the power conversion apparatus as much as possible, and reduce the possibility of the avalanche breakdown of the power conversion apparatus. In addition, in some cases in which the temperature of the power conversion apparatus is greater than or equal to the second temperature threshold or the temperature of the power conversion apparatus is less than the second temperature threshold, the controller can maintain the power conversion apparatus in the present operating protection mode. This can stabilize a status of the power conversion apparatus, and reduce impact on the power conversion apparatus.

With reference to the sixth possible implementation of the first aspect, in a seventh possible implementation, the controller is specifically configured to: if the voltage is less than the first voltage threshold, switch the power conversion apparatus to the low-level protection mode or the high-level protection mode based on the output current of the power conversion apparatus; or if the voltage is greater than or equal to the first voltage threshold, maintain the power conversion apparatus in the present operating protection mode or switch the power conversion apparatus to the high-level protection mode based on the voltage and the second voltage threshold, where the second voltage threshold is greater than the first voltage threshold.

In the solution provided in an embodiment of this application, because the second voltage threshold is greater than the first voltage threshold, when it is determined that the voltage of the power conversion apparatus is greater than the first voltage threshold, the power conversion apparatus can be further maintained in the present operating protection mode or the power conversion apparatus can be further switched to the high-level protection mode based on the voltage of the power conversion apparatus and the second voltage threshold. This can ensure the normal operation of the power conversion apparatus as much as possible, and reduce the possibility of the avalanche breakdown of the power conversion apparatus.

With reference to the seventh possible implementation of the first aspect, in an eighth possible implementation, the controller is specifically configured to: if the voltage is less than the second voltage threshold, maintain the power conversion apparatus in the present operating protection mode; or if the voltage is greater than or equal to the second voltage threshold, switch the power conversion apparatus to the high-level protection mode.

In the solution provided in an embodiment of this application, a relationship between the voltage of the power conversion apparatus and the second voltage threshold is determined, and the power conversion apparatus is maintained in the present operating protection mode or the power conversion apparatus is switched to the high-level protection mode based on a determining result. This can ensure the normal operation of the power conversion apparatus as much as possible, and reduce the possibility of the avalanche breakdown of the power conversion apparatus. In addition, when the voltage of the power conversion apparatus is less than the second voltage threshold, the controller can maintain the power conversion apparatus in the present operating protection mode. This can stabilize the status of the power conversion apparatus, and reduce the impact on the power conversion apparatus.

With reference to any one of the third to the eighth possible implementations of the first aspect, in a ninth possible implementation, that the controller is specifically configured to switch the power conversion apparatus to the low-level protection mode or the high-level protection mode based on the output current of the power conversion apparatus includes: if a ratio of a current difference to a rated current is less than a first preset value, switching the power conversion apparatus to the low-level protection mode, where the current difference is a difference between the output current of the power conversion apparatus and the rated current; or if a ratio of a current difference to a rated current is greater than or equal to a first preset value, switching the power conversion apparatus to the high-level protection mode.

In the solution provided in an embodiment of this application, a relationship between the ratio of the current difference to the rated current and the first preset value is determined, and the power conversion apparatus is switched to the low-level protection mode or the high-level protection mode based on a determining result. This can ensure the normal operation of the power conversion apparatus as much as possible, and reduce the possibility of the avalanche breakdown of the power conversion apparatus.

With reference to any one of the first aspect or the first to the ninth possible implementations of the first aspect, in a tenth possible implementation, the power conversion apparatus is in the low-level protection mode at a first moment. The controller is specifically configured to: control, at a second moment, the output current of the power conversion apparatus to be less than or equal to the third current value, where a difference between the second moment and the first moment is a first difference; and control, at a third moment, an overcurrent protection point of the power conversion apparatus to be the fourth current value, where a difference between the third moment and the first moment is a second difference, and the second difference is greater than the first difference.

In the solution provided in an embodiment of this application, the second difference is greater than the first difference. To be specific, an action of the controller for controlling the overcurrent protection point of the power conversion apparatus to be the fourth current value lags behind an action of controlling the output current of the power conversion apparatus to be less than or equal to the third current value, or a moment at which the controller successfully controls the overcurrent protection point of the power conversion apparatus to be the fourth current value is later than a moment at which the controller successfully controls the output current of the power conversion apparatus to be less than or equal to the third current value. This can improve accuracy of protecting the power conversion apparatus.

With reference to any one of the first aspect or the first to the ninth possible implementations of the first aspect, in an eleventh possible implementation, the power conversion apparatus is in the high-level protection mode at a fourth moment. The controller is specifically configured to: control, at a fifth moment, the output current of the power conversion apparatus to be less than or equal to the first current value, where a difference between the fifth moment and the fourth moment is a third difference; and control, at a sixth moment, an overcurrent protection point of the power conversion apparatus to be the second current value, where a difference between the sixth moment and the fourth moment is a fourth difference, and the fourth difference is less than the third difference.

In the solution provided in an embodiment of this application, the fourth difference is less than the third difference. To be specific, an action of the controller for controlling the overcurrent protection point of the power conversion apparatus to be the second current value precedes an action of controlling the output current of the power conversion apparatus to be less than or equal to the first current value, or a moment at which the controller successfully controls the overcurrent protection point of the power conversion apparatus to be the second current value is earlier than a moment at which the controller successfully controls the output current of the power conversion apparatus to be less than or equal to the first current value. This can improve accuracy of protecting the power conversion apparatus. With reference to any one of the first aspect or the first to the eleventh possible implementations of the first aspect, in a twelfth possible implementation, the controller is further configured to: determine whether high voltage ride-through or low voltage ride-through occurs on a power grid connected to the power conversion apparatus; if the high voltage ride-through or the low voltage ride-through occurs on the power grid, determine whether the power conversion apparatus has a capability of outputting the first current value, where the first current value is a maximum value of the output current of the power conversion apparatus; and when the power conversion apparatus has the capability of outputting the first current value, control the power conversion apparatus to input the first current value to the power grid.

In the solution provided in an embodiment of this application, if it is determined that the high voltage ride-through or the low voltage ride-through occurs on the power grid connected to the power conversion apparatus, when the power conversion apparatus has the capability of outputting the first current value, the power conversion apparatus is controlled to input the first current value to the power grid, so that a required current can be provided for the power grid, to ensure safety of the power grid.

With reference to the twelfth possible implementation of the first aspect, in a thirteenth possible implementation, when the power conversion apparatus has the capability of outputting the first current value, if the overcurrent protection point of the power conversion apparatus is the fourth current value, the controller is further configured to: control the overcurrent protection point of the power conversion apparatus to be the second current value, where the second current value is greater than the fourth current value, and the second current value is greater than the first current value. In the solution provided in an embodiment of this application, when the power conversion apparatus has the capability of outputting the first current value, if the overcurrent protection point of the power conversion apparatus is the fourth current value, the controller can control the overcurrent protection point of the power conversion apparatus to be the second current value, where the second current value is greater than the fourth current value. This adjustment can ensure the required current of the power grid, and prevent a protection apparatus from performing a false protection action on the power conversion apparatus.

With reference to any one of the first aspect or the first to the thirteenth possible implementations of the first aspect, in a fourteenth possible implementation, the controller is specifically configured to: determine a target temperature and a target voltage, where the target temperature is a minimum temperature in temperatures of a plurality of sub-power conversion apparatuses included in the power conversion apparatus, and the target voltage is an input voltage of the power conversion apparatus; and switch the operating protection mode of the power conversion apparatus based on the target temperature and the target voltage.

In the solution provided in an embodiment of this application, the operating protection mode of the power conversion apparatus is switched based on the minimum temperature in the temperatures of the plurality of sub-power conversion apparatuses and the input voltage of the power conversion apparatus. This can improve accuracy of switching the operating protection mode of the power conversion apparatus.

According to a second aspect, a device protection method is provided, including: switching an operating protection mode of a device based on a temperature and a voltage of the device, where the operating protection mode includes a low-level protection mode and a high-level protection mode; in the low-level protection mode, an output current of the device is less than or equal to a first current value, an overcurrent protection current of the device is a second current value, or an output current of the device is less than or equal to a first current value and an overcurrent protection current of the device is a second current value; and in the high-level protection mode, an output current of the device is less than or equal to a third current value, an overcurrent protection current of the device is a fourth current value, or an output current of the device is less than or equal to a third current value and an overcurrent protection current of the device is a fourth current value, where the third current value is less than a first current value, and the fourth current value is less than a second current value.

In the solution provided in an embodiment of this application, when the operating protection mode of the device is switched in this application, two factors, namely, a voltage and a temperature, are considered, and operating conditions are covered more comprehensively. This can reduce a possibility of avalanche breakdown of the device, so that a possibility of an operation failure of the device can be reduced.

With reference to the second aspect, in a first possible implementation, the switching an operating protection mode of a device based on a temperature and a voltage of the device includes: if the voltage is less than a first voltage threshold, switching the device to the low-level protection mode; or if the voltage is greater than or equal to a first voltage threshold, switching the operating protection mode of the device based on the voltage, a second voltage threshold, and the temperature, where the second voltage threshold is greater than the first voltage threshold.

In the solution provided in an embodiment of this application, because the second voltage threshold is greater than the first voltage threshold, when it is determined that the voltage of the device is greater than the first voltage threshold, the operating protection mode of the device can be further switched based on the voltage, the second voltage threshold, and the temperature. This can ensure normal operation of the device as much as possible, and reduce the possibility of the avalanche breakdown of the device.

With reference to the first possible implementation of the second aspect, in a second possible implementation, the switching the operating protection mode of the device based on the voltage, a second voltage threshold, and the temperature includes: if the voltage is less than the second voltage threshold, maintaining the device in a present operating protection mode; or if the voltage is greater than or equal to the second voltage threshold, switching the operating protection mode of the device based on the temperature, a first temperature threshold, a second temperature threshold, and the output current of the device.

In the solution provided in an embodiment of this application, a relationship between the voltage of the device and the second voltage threshold is determined, and the operating protection mode of the device is switched or the device is maintained in the present operating protection mode based on a determining result. This can ensure the normal operation of the device as much as possible, and reduce the possibility of the avalanche breakdown of the device. In addition, in some cases in which the voltage is less than the second voltage threshold or the voltage is greater than the second voltage threshold, a controller can maintain the device in the present operating protection mode. This can stabilize a status of the device, and reduce impact on the device.

With reference to the second possible implementation of the second aspect, in a third possible implementation, the switching the operating protection mode of the device based on the temperature, a first temperature threshold, a second temperature threshold, and the output current of the device includes: if the temperature is less than the first temperature threshold, maintaining the device in the present operating protection mode or switching the device to the high-level protection mode based on the temperature and the second temperature threshold, where the second temperature threshold is less than the first temperature threshold; or if the temperature is greater than or equal to the first temperature threshold, switching the device to the low-level protection mode or the high-level protection mode based on the output current of the device.

In the solution provided in an embodiment of this application, a relationship between the temperature of the device and the first temperature threshold is determined, and the operating protection mode of the device is switched or the device is maintained in the present operating protection mode based on a determining result. This can ensure the normal operation of the device as much as possible, and reduce the possibility of the avalanche breakdown of the device.

With reference to the third possible implementation of the second aspect, in a fourth possible implementation, the maintaining the device in the present operating protection mode or switching the device to the high-level protection mode based on the temperature and the second temperature threshold includes: if the temperature is less than the second temperature threshold, switching the device to the high-level protection mode; or if the temperature is greater than or equal to the second temperature threshold, maintaining the device in the present operating protection mode.

In the solution provided in an embodiment of this application, a relationship between the temperature of the device and the second temperature threshold is determined, and the device is switched to the high-level protection mode or the device is maintained in the present operating protection mode based on a determining result. This can ensure the normal operation of the device as much as possible, and reduce the possibility of the avalanche breakdown of the device. In addition, when the temperature of the device is greater than or equal to the second temperature threshold, the controller can maintain the device in the present operating protection mode. This can stabilize the status of the device, and reduce the impact on the device.

With reference to the second aspect, in a fifth possible implementation, the switching an operating protection mode of a device based on a temperature and a voltage of the device includes: if the temperature is greater than or equal to a first temperature threshold, switching the device to the low-level protection mode or the high-level protection mode based on the output current of the device; or if the temperature is less than a first temperature threshold, switching the operating protection mode of the device based on the temperature and a second temperature threshold, where the second temperature threshold is less than the first temperature threshold.

In the solution provided in an embodiment of this application, a relationship between the temperature of the device and the first temperature threshold is determined, and the operating protection mode of the device is switched based on a determining result. This can ensure normal operation of the device as much as possible, and reduce the possibility of the avalanche breakdown of the device.

With reference to the fifth possible implementation of the second aspect, in a sixth possible implementation, the switching the operating protection mode of the device based on the temperature and a second temperature threshold includes: if the temperature is less than the second temperature threshold, switching the operating protection mode of the device based on the voltage, a first voltage threshold, a second voltage threshold, and the output current of the device; or if the temperature is greater than or equal to the second temperature threshold, maintaining the device in a present operating protection mode.

In the solution provided in an embodiment of this application, a relationship between the temperature of the device and the second temperature threshold is determined, and the operating protection mode of the device is switched or the device is maintained in the present operating protection mode based on a determining result. This can ensure the normal operation of the device as much as possible, and reduce the possibility of the avalanche breakdown of the device. In addition, in some cases in which the temperature of the device is greater than or equal to the second temperature threshold or the temperature of the device is less than the second temperature threshold, a controller can maintain the device in the present operating protection mode. This can stabilize a status of the device, and reduce impact on the device.

With reference to the sixth possible implementation of the second aspect, in a seventh possible implementation, the switching the operating protection mode of the device based on the voltage, a first voltage threshold, a second voltage threshold, and the output current of the device includes: if the voltage is less than the first voltage threshold, switching the device to the low-level protection mode or the high-level protection mode based on the output current of the device; or if the voltage is greater than or equal to the first voltage threshold, maintaining the device in the present operating protection mode or switching the device to the high-level protection mode based on the voltage and the second voltage threshold, where the second voltage threshold is greater than the first voltage threshold.

In the solution provided in an embodiment of this application, because the second voltage threshold is greater than the first voltage threshold, when it is determined that the voltage of the device is greater than the first voltage threshold, the device can be further maintained in the present operating protection mode or the device can be further switched to the high-level protection mode based on the voltage of the device and the second voltage threshold. This can ensure the normal operation of the device as much as possible, and reduce the possibility of the avalanche breakdown of the device.

With reference to the seventh possible implementation of the second aspect, in an eighth possible implementation, the maintaining the device in the present operating protection mode or switching the device to the high-level protection mode based on the voltage and the second voltage threshold includes: if the voltage is less than the second voltage threshold, maintaining the device in the present operating protection mode; or if the voltage is greater than or equal to the second voltage threshold, switching the device to the high-level protection mode.

In the solution provided in an embodiment of this application, a relationship between the voltage of the device and the second voltage threshold is determined, and the device is maintained in the present operating protection mode or the device is switched to the high-level protection mode based on a determining result. This can ensure the normal operation of the device as much as possible, and reduce the possibility of the avalanche breakdown of the device. In addition, when the voltage of the device is less than the second voltage threshold, the controller can maintain the device in the present operating protection mode. This can stabilize the status of the device and reduce the impact on the device.

With reference to any one of the third to the eighth possible implementations of the second aspect, in a ninth possible implementation, the switching the device to the low-level protection mode or the high-level protection mode based on the output current of the device includes: if a ratio of a current difference to a rated current is less than a first preset value, switching the device to the low-level protection mode, where the current difference is a difference between the output current of the device and the rated current; or if a ratio of a current difference to a rated current is greater than or equal to a first preset value, switching the device to the high-level protection mode.

In the solution provided in an embodiment of this application, a relationship between the ratio of the current difference to the rated current and the first preset value is determined, and the device is switched to the low-level protection mode or the high-level protection mode based on a determining result. This can ensure the normal operation of the device as much as possible, and reduce the possibility of the avalanche breakdown of the device.

With reference to any one of the second aspect or the first to the ninth possible implementations of the second aspect, in a tenth possible implementation, the device is in the low-level protection mode at a first moment. The switching an operating protection mode of a device based on a temperature and a voltage of the device includes: controlling, at a second moment, the output current of the device to be less than or equal to the third current value, where a difference between the second moment and the first moment is a first difference; and controlling, at a third moment, an overcurrent protection point of the device to be the fourth current value, where a difference between the third moment and the first moment is a second difference, and the second difference is greater than the first difference.

In the solution provided in an embodiment of this application, the second difference is greater than the first difference. To be specific, an action of the controller for controlling the overcurrent protection point of the device to be the fourth current value lags behind an action of controlling the output current of the device to be less than or equal to the third current value, or a moment at which the controller successfully controls the overcurrent protection point of the device to be the fourth current value is later than a moment at which the controller successfully controls the output current of the device to be less than or equal to the third current value. This can improve accuracy of protecting the device. With reference to any one of the second aspect or the first to the ninth possible implementations of the second aspect, in an eleventh possible implementation, the device is in the high-level protection mode at a fourth moment. The switching an operating protection mode of a device based on a temperature and a voltage of the device includes: controlling, at a fifth moment, the output current of the device to be less than or equal to the first current value, where a difference between the fifth moment and the fourth moment is a third difference; and controlling, at a sixth moment, an overcurrent protection point of the device to be the second current value, where a difference between the sixth moment and the fourth moment is a fourth difference, and the fourth difference is less than the third difference.

In the solution provided in an embodiment of this application, the fourth difference is less than the third difference. To be specific, an action of the controller for controlling the overcurrent protection point of the device to be the second current value precedes an action of controlling the output current of the device to be less than or equal to the first current value, or a moment at which the controller successfully controls the overcurrent protection point of the device to be the second current value is earlier than a moment at which the controller successfully controls the output current of the device to be less than or equal to the first current value. This can improve accuracy of protecting the device. With reference to any one of the second aspect or the first to the eleventh possible implementations of the second aspect, in a twelfth possible implementation, the method further includes: determining whether high voltage ride-through or low voltage ride-through occurs on a power grid connected to the device; if the high voltage ride-through or the low voltage ride-through occurs on the power grid, determining whether the device has a capability of outputting the first current value, where the first current value is a maximum value of the output current of the device; and when the device has the capability of outputting the first current value, controlling the device to input the first current value to the power grid.

In the solution provided in an embodiment of this application, if it is determined that the high voltage ride-through or the low voltage ride-through occurs on the power grid connected to the device, when the device has the capability of outputting the first current value, the device is controlled to input the first current value to the power grid, so that a required current can be provided for the power grid, to ensure safety of the power grid.

With reference to the twelfth possible implementation of the second aspect, in a thirteenth possible implementation, when the device has the capability of outputting the first current value, if an overcurrent protection point of the device is the fourth current value, the method further includes: controlling the overcurrent protection point of the device to be the second current value, where the second current value is greater than the fourth current value, and the second current value is greater than the first current value.

In the solution provided in an embodiment of this application, when the device has the capability of outputting the first current value, if the overcurrent protection point of the device is the fourth current value, the controller can control the overcurrent protection point of the device to be the second current value, where the second current value is greater than the fourth current value. This adjustment can ensure the required current of the power grid, and prevent a protection apparatus from performing a false protection action on the device.

With reference to any one of the second aspect or the first to the thirteenth possible implementations of the second aspect, in a fourteenth possible implementation, the switching an operating protection mode of a device based on a temperature and a voltage of the device includes: determining a target temperature and a target voltage, where the target temperature is a minimum temperature in temperatures of a plurality of subdevices included in the device, and the target voltage is an input voltage of the device; and switching the operating protection mode of the device based on the target temperature and the target voltage.

In the solution provided in an embodiment of this application, the operating protection mode of the device is switched based on the minimum temperature in the temperatures of the plurality of subdevices and the input voltage of the device. This can improve accuracy of switching the operating protection mode of the device.

According to a third aspect, a computer storage medium is provided, including computer instructions. When the computer instructions are run on a control device, the control device is enabled to perform the method according to any one of the second aspect or the possible implementations of the second aspect.

According to a fourth aspect, a computer program product is provided. When the computer program product runs on a control device, the control device is enabled to perform the method according to any one of the second aspect or the possible designs of the second aspect.

**BRIEF DESCRIPTION OF DRAWINGS**

FIG. 1 is a schematic diagram of a scenario applicable to this application;
FIG. 2 is a schematic block diagram of a power conversion apparatus according to an embodiment of this application;
FIG. 3 is a schematic diagram of a device protection method according to an embodiment of this application;
FIG. 4 is a schematic diagram of another device protection method according to an embodiment of this application;
FIG. 5A and FIG. 5B are a schematic diagram of still another device protection method according to an embodiment of this application;
FIG. 6A and FIG. 6B are a schematic diagram of yet another device protection method according to an embodiment of this application; and
FIG. 7 is a schematic diagram of still yet another device protection method according to an embodiment of this application.

**DESCRIPTION OF EMBODIMENTS**

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features.

The following briefly describes related terms that may be used in this application.

Avalanche breakdown means that a current flowing through some insulators or semiconductors suddenly increases when an adequate voltage is applied to the insulators or the semiconductors. A capability of most insulators or semiconductors to carry currents is limited by a lack of electrons that can move freely outside an atom. Electrons produced by a strong current can knock out electrons in an atom and turn the electrons into free electrons. This phenomenon is referred to as the avalanche breakdown.

A breakdown voltage is a voltage that causes a dielectric to be broke down. The dielectric loses its dielectric performance to become a conductor under an action of a strong enough electric field. This is referred to as dielectric breakdown, and a corresponding voltage is referred to as a breakdown voltage.

High and low voltage ride-through includes high voltage ride-through or low voltage ride-through. When a voltage at an alternating current outlet side of a converter rises or dips due to an accident or disturbance of an electric power system, within a specific abrupt voltage change range and a time interval, the converter can ensure continuous operation without disconnecting from a grid.

A short circuit means that, in a circuit, a current directly connects positive and negative poles of a power supply, without flowing through a device. A current on the circuit is extremely high when short circuit occurs, and the device may be burned in a serious case.

An open circuit, also referred to as an open circuit, means that a switch is not turned on, a conductor is not appropriately connected, or an electrical appliance is burned out or not appropriately installed (for example, a voltmeter is connected in series in the circuit), that is, the entire circuit is disconnected somewhere. When the circuit is open, a voltage at both ends of a device is extremely high and is basically equal to a power supply voltage.

Overcurrent protection is a protection mode in which a protection apparatus performs an action when a current of a device exceeds a predetermined value. When the current flowing through the device exceeds the predetermined value, the protection apparatus is started and selectivity of the action is ensured within a time limit, to trip a circuit breaker or give an alarm signal.

This application provides a power conversion apparatus and a device protection method. Various factors are considered, and operating conditions are covered more comprehensively. This can reduce a possibility of avalanche breakdown of the power conversion apparatus, so that a possibility of an operation failure of the power conversion apparatus can be reduced.

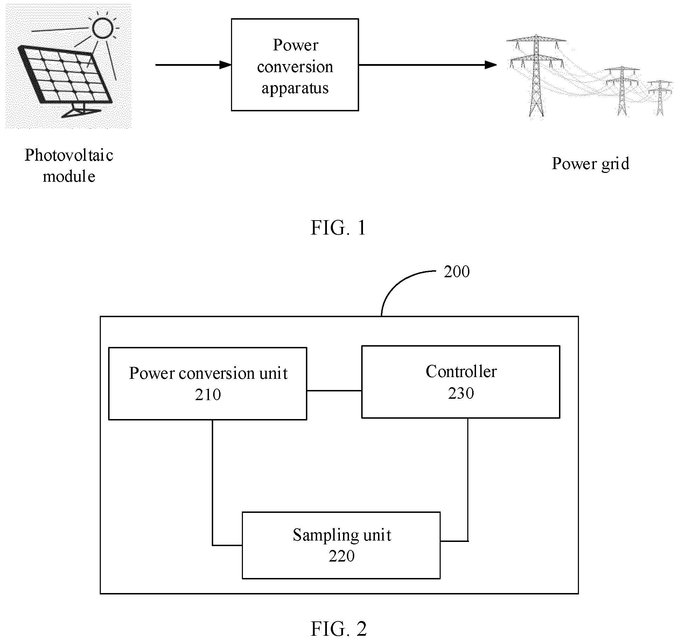

This application may be applied to a power electronic conversion apparatus, for example, a converter or an uninterruptible power supply (uninterruptible power supply, UPS). FIG. 1 is a schematic diagram of a scenario applicable to this application. The power conversion apparatus may receive energy from a photovoltaic module, and the power conversion apparatus may also output the energy to a power grid.

FIG. 2 is a schematic block diagram of a power conversion apparatus 200 according to an embodiment of this application. The power conversion apparatus 200 may include a power conversion unit 210, a sampling unit 220, and a controller 230. The power conversion unit 210 is connected to the controller 230. The sampling unit 220 is separately connected to the power conversion unit 210 and the controller 230, and is configured to detect a temperature and a voltage of the power conversion apparatus.

The controller 230 is configured to switch an operating protection mode of the power conversion apparatus 200 based on the temperature and the voltage of the power conversion apparatus 200. The operating protection mode includes a low-level protection mode and a high-level protection mode.

The controller 230 is configured to: in the low-level protection mode, control an output current of the power conversion apparatus to be less than or equal to a first current value, control an overcurrent protection current of the power conversion apparatus to be a second current value, or control an output current of the power conversion apparatus to be less than or equal to a first current value and an overcurrent protection current of the power conversion apparatus to be a second current value.

The controller 230 is configured to: in the high-level protection mode, control an output current of the power conversion apparatus to be less than or equal to a third current value, control an overcurrent protection current of the power conversion apparatus to be a fourth current value, or control an output current of the power conversion apparatus to be less than or equal to a third current value and an overcurrent protection current of the power conversion apparatus to be a fourth current value, where the third current value is less than a first current value, and the fourth current value is less than a second current value.

In this embodiment of this application, the first current value may be understood as a maximum current that is allowed to pass through in a short period of time when the power conversion apparatus is in a state in which avalanche breakdown is not easy to occur. The third current value may be understood as a maximum current that is allowed to pass through in a short period of time when the power conversion apparatus is in a state in which avalanche breakdown is easy to occur.

As described above, the overcurrent protection is the protection mode in which the protection apparatus performs an action when the current of the device exceeds the predetermined value. When the current flowing through the power conversion apparatus exceeds the predetermined value, the protection apparatus is started and the selectivity of the action is ensured within the time limit, to trip the circuit breaker or give the alarm signal. The predetermined value may be the second current value or the fourth current value in this embodiment of this application.

In this embodiment of this application, if the power conversion apparatus is in a state in which avalanche breakdown is not easy to occur, the controller may switch the power conversion apparatus to the low-level protection mode, and may control the output current of the power conversion apparatus to be less than or equal to the first current value. For example, the first current value may be set to 40 A. In this case, the output current of the power conversion apparatus may reach a maximum of 40 A. If the power conversion apparatus is in a state in which avalanche breakdown is easy to occur, the controller may switch the power conversion apparatus to the high-level protection mode, and may control the output current of the power conversion apparatus to be less than or equal to the third current value. For example, the third current value may be set to 20 A. In this case, the output current of the power conversion apparatus can reach a maximum of 20 A. Because the power conversion apparatus is currently in a state in which avalanche breakdown is easy to occur, if a maximum value of the output current is not reduced, the output current of the power conversion apparatus may approach or even reach the first current value. It can be learned from a

$$u = L * \frac{di}{dt}$$

formula that the voltage is further increased at this time, which increases a probability of breaking down the power conversion apparatus. If a maximum value of the output current is reduced, and the maximum value of the output current of the power conversion apparatus is reduced to the third current value, it can be learned from the foregoing formula that the voltage may be reduced, so that a probability of breaking down the power conversion apparatus can be reduced.

In this embodiment of this application, if the power conversion apparatus is in a state in which avalanche breakdown is not easy to occur, the controller may switch the power conversion apparatus to the low-level protection mode, and may control an overcurrent protection point of the power conversion apparatus to be the second current value (the overcurrent protection point is the overcurrent protection current mentioned above). The second current value may be 1.5 times the first current value. In the foregoing example, the first current value is set to 40 A, and the second current value may be set to 60 A. In this case, if a current flowing through the power conversion apparatus exceeds 60 A, the protection apparatus is started to protect the power conversion apparatus. If the power conversion apparatus is in a state in which avalanche breakdown is easy to occur, the controller may switch the power conversion apparatus to the high-level protection mode, and may control an overcurrent protection point of the power conversion apparatus to be the fourth current value. The fourth current value may be 1.5 times the third current value. In the foregoing example, the third current value is set to 20 A, and the fourth current value may be set to 30 A. In this case, if a current flowing through the power conversion apparatus exceeds 30 A, the protection apparatus is started to protect the power conversion apparatus. Because the power conversion apparatus is currently in a state in which avalanche breakdown is easy to occur, if the overcurrent protection point of the power conversion apparatus is not reduced, the current flowing through the power conversion apparatus may approach or even reach the second current value. Because the overcurrent protection point of the power conversion apparatus is not reduced, the protection apparatus does not perform an action, causing the power conversion apparatus to be broken down. If the overcurrent protection point of the power conversion apparatus is reduced, when the current flowing through the power conversion apparatus exceeds the fourth current value, the protection apparatus performs the action, so that a probability of breaking down the power conversion apparatus can be reduced.

In the solution provided in this embodiment of this application, when the operating protection mode of the power conversion apparatus is switched in this application, two factors, namely, the voltage and the temperature, are considered, and operating conditions are covered more comprehensively. This can reduce a possibility of avalanche breakdown of the power conversion apparatus, so that a possibility of an operation failure of the power conversion apparatus can be reduced.

As described above, the controller is configured to switch the operating protection mode of the power conversion apparatus based on the temperature and the voltage of the power conversion apparatus. In a specific protection process, the controller may switch the operating protection mode of the power conversion apparatus in different manners. For details, refer to the following text.

Manner 1

Optionally, in some embodiments, the controller 230 is specifically configured to:

> if the voltage is less than a first voltage threshold, switch the power conversion apparatus to the low-level protection mode; or
> if the voltage is greater than or equal to a first voltage threshold, switch the operating protection mode of the power conversion apparatus based on the voltage, a second voltage threshold, and the temperature, where the second voltage threshold is greater than the first voltage threshold.

The first voltage threshold and/or the second voltage threshold in this embodiment of this application are/is related to a rated voltage of the power conversion apparatus. For a power conversion apparatus with a different rated voltage, first voltage thresholds are different, second voltage thresholds are different, or the first voltage threshold and the second voltage threshold are different. For example, for a power conversion apparatus whose rated voltage is 200 V, the first voltage threshold may be set to a value slightly greater than the rated voltage, for example, the first voltage threshold may be set to 220 V; and the second voltage threshold may be set to a value far greater than the rated voltage, for example, the second voltage threshold may be set to 310 V For a power conversion apparatus whose rated voltage is 63 V, the first voltage threshold may be set to a value slightly greater than the rated voltage, for example, the first voltage threshold may be set to 80 V; and the second voltage threshold may be set to a value far greater than the rated voltage, for example, the second voltage threshold may be set to 140 V

For example, the first voltage threshold is 220 V and the second voltage threshold is 310 V If the voltage of the power conversion apparatus is less than the first voltage threshold 220 V, it indicates that an input voltage of the power conversion apparatus is not extremely high at this time, and a probability of avalanche breakdown of the power conversion apparatus is extremely low, even does not exist. Therefore, the power conversion apparatus may be switched to the low-level protection mode. If the voltage of the power conversion apparatus is greater than or equal to the first voltage threshold 220 V, it indicates that an input voltage of the power conversion apparatus is high at this time, but it cannot be determined whether the input voltage of the power conversion apparatus has reached a level that poses a threat to safety of the power conversion apparatus. Therefore, the operating protection mode of the power conversion apparatus may be further switched based on the voltage, the second voltage threshold, and the temperature. In the solution provided in this embodiment of this application, because the second voltage threshold is greater than the first voltage threshold, when it is determined that the voltage of the power conversion apparatus is greater than the first voltage threshold, the operating protection mode of the power conversion apparatus can be further switched based on the voltage, the second voltage threshold, and the temperature. This can ensure normal operation of the power conversion apparatus as much as possible, and reduce the possibility of the avalanche breakdown of the power conversion apparatus.

Optionally, in some embodiments, the controller 230 is specifically configured to:

> if the voltage is less than the second voltage threshold, maintain the power conversion apparatus in a present operating protection mode; or
> if the voltage is greater than or equal to the second voltage threshold, switch the operating protection mode of the power conversion apparatus based on the temperature, a first temperature threshold, a second temperature threshold, and the output current of the power conversion apparatus.

In this embodiment of this application, maintaining the power conversion apparatus in the present operating protection mode includes: maintaining the low-level protection mode or maintaining the high-level protection mode. In the high-level protection mode, the output current of the power conversion apparatus may be less than or equal to the first current value and/or the overcurrent protection point of the power conversion apparatus is the second current value. In the low-level protection mode, the output current of the power conversion apparatus may be less than or equal to the third current value and/or the overcurrent protection point of the power conversion apparatus is the fourth current value. The third current value is less than the first current value, and the fourth current value is less than the second current value.

In this embodiment of this application, maintaining the power conversion apparatus in the present operating protection mode may be understood as: maintaining the operating protection mode of the power conversion apparatus at a previous moment. If the power conversion apparatus is in the low-level protection mode at the previous moment, the controller may continue to maintain the power conversion apparatus in the low-level protection mode. If the power conversion apparatus is in the high-level protection mode at the previous moment, the controller may continue to maintain the power conversion apparatus in the high-level protection mode. Simply speaking, the controller may maintain a maximum value of the output current of the power conversion apparatus at the previous moment and/or the overcurrent protection point of the power conversion apparatus remains unchanged.

That the second voltage threshold is 310 V is still used as an example. If the voltage of the power conversion apparatus is less than the second voltage threshold 310 V, it indicates that an input voltage of the power conversion apparatus is high at this time, but is not enough to pose a threat to safety of the power conversion apparatus. In this case, the controller may maintain the power conversion apparatus in the present operating protection mode. If the voltage of the power conversion apparatus is greater than or equal to the second voltage threshold 310 V, it indicates that an input voltage of the power conversion apparatus is extremely high at this time, and the input voltage may already pose a threat to safety of the power conversion apparatus. In this case, the controller may switch the operating protection mode of the power conversion apparatus based on the temperature, the first temperature threshold, and the second temperature threshold.

In the solution provided in this embodiment of this application, a relationship between the voltage of the power conversion apparatus and the second voltage threshold is determined, and the operating protection mode of the power conversion apparatus is switched or the power conversion apparatus is maintained in the present operating protection mode based on a determining result. This can ensure the normal operation of the power conversion apparatus as much as possible, and reduce the possibility of the avalanche breakdown of the power conversion apparatus. In addition, in some cases in which the voltage is less than the second voltage threshold or the voltage is greater than the second voltage threshold, the controller can maintain the power conversion apparatus in the present operating protection mode. This can stabilize a status of the power conversion apparatus, and reduce impact on the power conversion apparatus. Optionally, in some embodiments, the controller 230 is specifically configured to:

if the temperature is less than the first temperature threshold, maintain the power conversion apparatus in the present operating protection mode or switch the power conversion apparatus to the high-level protection mode based on the temperature and the second temperature threshold, where the second temperature threshold is less than the first temperature threshold; or

if the temperature is greater than or equal to the first temperature threshold, switch the power conversion apparatus to the low-level protection mode or the high-level protection mode based on the output current of the power conversion apparatus.

In this embodiment of this application, the first temperature threshold and/or the second temperature threshold are/is related to a relationship between a breakdown voltage and the temperature of the power conversion apparatus. The first temperature threshold and/or the second temperature threshold vary/varies according to the relationship between the breakdown voltage and the temperature. Generally, the breakdown voltage of the power conversion apparatus is directly proportional to the temperature. That is, a higher temperature indicates a higher breakdown voltage of the power conversion apparatus, and a lower temperature indicates a lower breakdown voltage of the power conversion apparatus. For different power conversion apparatuses, a same breakdown voltage may correspond to different temperatures.

Therefore, the first temperature threshold and/or the second temperature threshold vary/varies according to the relationship between the breakdown voltage and the temperature. For example, for a power conversion apparatus with a high temperature corresponding to a breakdown voltage, the first temperature threshold and/or the second temperature threshold may be set to a large value. For example, the first temperature threshold may be set to 60°C, and the second temperature threshold may be set to 40°C. For a power conversion apparatus with a low temperature corresponding to the same breakdown voltage, the first temperature threshold and/or the second temperature threshold may be set to a small value. The first temperature threshold may be set to 50°C, and the second temperature threshold may be set to 35°C.

For example, the first temperature threshold is 60°C, and the second temperature threshold is 40°C. If the temperature of the power conversion apparatus is less than the first temperature threshold 60°C, it indicates that the temperature of the power conversion apparatus is low at this time. However, it cannot be determined whether the temperature of the power conversion apparatus has reached a level that poses a threat to safety of the power conversion apparatus. Therefore, the power conversion apparatus may be further maintained in the present operating protection mode or the power conversion apparatus may be further switched to the high-level protection mode based on a relationship between the temperature of the power conversion apparatus and the second temperature threshold. If the temperature of the power conversion apparatus is greater than or equal to the first temperature threshold 60°C, it indicates that the temperature of the power conversion apparatus is extremely high at this time. Because the breakdown voltage of the power conversion apparatus is directly proportional to the temperature, the breakdown voltage of the power conversion apparatus is also extremely high, and the power conversion apparatus is not easily broken down. In this case, the power conversion apparatus may be switched to the low-level protection mode or the high-level protection mode based on the output current of the power conversion apparatus.

In the solution provided in this embodiment of this application, a relationship between the temperature of the power conversion apparatus and the first temperature threshold is determined, and the operating protection mode of the power conversion apparatus is switched or the power conversion apparatus is maintained in the present operating protection mode based on a determining result. This can ensure the normal operation of the power conversion apparatus as much as possible, and reduce the possibility of the avalanche breakdown of the power conversion apparatus.

Optionally, in some embodiments, the controller 230 is specifically configured to:

if the temperature is less than the second temperature threshold, switch the power conversion apparatus to the high-level protection mode; or
if the temperature is greater than or equal to the second temperature threshold, maintain the power conversion apparatus in the present operating protection mode.

That the second temperature threshold is 40°C is still used as an example. If the temperature of the power conversion apparatus is less than the second temperature threshold 40°C, it indicates that the temperature of the power conversion apparatus is extremely low at this time. Because the breakdown voltage of the power conversion apparatus is directly proportional to the temperature, the breakdown voltage of the power conversion apparatus is extremely low, and the power conversion apparatus is easily broken down. In this case, the controller 230 may switch the power conversion apparatus to the high-level protection mode. If the temperature of the power conversion apparatus is greater than or equal to the second temperature threshold 40°C, it indicates that the temperature of the power conversion apparatus is high at this time, but is not enough to pose a threat to safety of the power conversion apparatus. In this case, the controller 230 may maintain the power conversion apparatus in the present operating protection mode.

In the solution provided in this embodiment of this application, the relationship between the temperature of the power conversion apparatus and the second temperature threshold is determined, and the power conversion apparatus is switched to the high-level protection mode or the power conversion apparatus is maintained in the present operating protection mode based on the determining result. This can ensure the normal operation of the power conversion apparatus as much as possible, and reduce the possibility of the avalanche breakdown of the power conversion apparatus. In addition, when the temperature of the power conversion apparatus is greater than or equal to the second temperature threshold, the controller can maintain the power conversion apparatus in the present operating protection mode. This can stabilize the status of the power conversion apparatus, and reduce the impact on the power conversion apparatus.

Manner 2:

Optionally, in some embodiments, the controller 230 is specifically configured to:

if the temperature is greater than or equal to a first temperature threshold, switch the power conversion apparatus to the low-level protection mode or the high-level protection mode based on the output current of the power conversion apparatus; or
if the temperature is less than a first temperature threshold, switch the operating protection mode of the power conversion apparatus based on the temperature and a second temperature threshold, where the second temperature threshold is less than the first temperature threshold.

For setting of the first temperature threshold and/or the second temperature threshold, refer to related content of the foregoing manner 1. Details are not described herein again.

In the solution provided in this embodiment of this application, a relationship between the temperature of the power conversion apparatus and the first temperature threshold is determined, and the operating protection mode of the power conversion apparatus is switched based on a determining result. This can ensure normal operation of the power conversion apparatus as much as possible, and reduce the possibility of the avalanche breakdown of the power conversion apparatus.

Optionally, in some embodiments, the controller 230 is specifically configured to:

if the temperature is less than the second temperature threshold, switch the operating protection mode of the power conversion apparatus based on the voltage, a first voltage threshold, a second voltage threshold, and the output current of the power conversion apparatus; or

if the temperature is greater than or equal to the second temperature threshold, maintain the power conversion apparatus in a present operating protection mode.

In the solution provided in this embodiment of this application, a relationship between the temperature of the power conversion apparatus and the second temperature threshold is determined, and the operating protection mode of the power conversion apparatus is switched or the power conversion apparatus is maintained in the present operating protection mode based on a determining result. This can ensure the normal operation of the power conversion apparatus as much as possible, and reduce the possibility of the avalanche breakdown of the power conversion apparatus. In addition, in some cases in which the temperature of the power conversion apparatus is greater than or equal to the second temperature threshold or the temperature of the power conversion apparatus is less than the second temperature threshold, the controller can maintain the power conversion apparatus in the present operating protection mode. This can stabilize a status of the power conversion apparatus, and reduce impact on the power conversion apparatus.

Optionally, in some embodiments, the controller 230 is specifically configured to:

if the voltage is less than the first voltage threshold, switch the power conversion apparatus to the low-level protection mode or the high-level protection mode based on the output current of the power conversion apparatus; or

if the voltage is greater than or equal to the first voltage threshold, maintain the power conversion apparatus in the present operating protection mode or switch the power conversion apparatus to the high-level protection mode based on the voltage and the second voltage threshold, where the second voltage threshold is greater than the first voltage threshold.

For setting of the first voltage threshold and/or the second voltage threshold, refer to related content of the foregoing manner 1. Details are not described herein again.

In the solution provided in this embodiment of this application, because the second voltage threshold is greater than the first voltage threshold, when it is determined that the voltage of the power conversion apparatus is greater than the first voltage threshold, the power conversion apparatus can be further maintained in the present operating protection mode or the power conversion apparatus can be further switched to the high-level protection mode based on the voltage of the power conversion apparatus and the second voltage threshold. This can ensure the normal operation of the power conversion apparatus as much as possible, and reduce the possibility of the avalanche breakdown of the power conversion apparatus.

Optionally, in some embodiments, the controller 230 is specifically configured to:

if the voltage is less than the second voltage threshold, maintain the power conversion apparatus in the present operating protection mode; or

if the voltage is greater than or equal to the second voltage threshold, switch the power conversion apparatus to the high-level protection mode.

In the solution provided in this embodiment of this application, a relationship between the voltage of the power conversion apparatus and the second voltage threshold is determined, and the power conversion apparatus is maintained in the present operating protection mode or the power conversion apparatus is switched to the high-level protection mode based on a determining result. This can ensure the normal operation of the power conversion apparatus as much as possible, and reduce the possibility of the avalanche breakdown of the power conversion apparatus. In addition, when the voltage of the power conversion apparatus is less than the second voltage threshold, the controller can maintain the power conversion apparatus in the present operating protection mode. This can stabilize the status of the power conversion apparatus, and reduce the impact on the power conversion apparatus.

It is described in both the manner 1 and the manner 2 that, in some embodiments, the controller can switch the power conversion apparatus to the low-level protection mode or the high-level protection mode. For a specific protection process, refer to the following text.

Optionally, in some embodiments, that the controller 230 is specifically configured to switch the power conversion apparatus to the low-level protection mode or the high-level protection mode based on the output current of the power conversion apparatus includes:

if a ratio of a current difference to a rated current is less than a first preset value, switching the power conversion apparatus to the low-level protection mode, where the current difference is a difference between the output current of the power conversion apparatus and the rated current; or

if a ratio of a current difference to a rated current is greater than or equal to a first preset value, switching the power conversion apparatus to the high-level protection mode.

In this embodiment of this application, the output current of the power conversion apparatus may be understood as a current output from the power conversion apparatus, and the rated current may be understood as a current that allows long-term continuous operation under a rated environmental condition (an ambient temperature, sunshine, an altitude, and an installation condition).

It is assumed that the rated current of the power conversion apparatus is 20 A, and the first preset value is 5%. If the output current of the power conversion apparatus is 20.5 A, the ratio of the current difference to the rated current is (20.5-20)/20=2.5%, and is less than the first preset value 5%. It indicates that the output current of the power conversion apparatus is basically in a normal range at this time, and therefore, the controller may switch the power conversion apparatus to the low-level protection mode. If the output current of the power conversion apparatus is 40 A, the ratio of the current difference to the rated current is (40-20)/20=100%, and is far greater than the first preset value 5%. It indicates that the output current of the power conversion apparatus is in an abnormal range at this time, the power conversion apparatus is very likely to be short-circuited, and therefore, the controller may switch the power conversion apparatus to the high-level protection mode.

In some possible implementations, when the temperature of the power conversion apparatus is greater than or equal to the first temperature threshold, the controller may alternatively switch the power conversion apparatus to the low-level protection mode or the high-level protection mode based on an input voltage of equipment including the power conversion apparatus. If the input voltage of the equipment including the power conversion apparatus is far greater than a rated voltage of the equipment, for example, it is assumed that the rated voltage of the equipment is 220 V and the input voltage of the equipment is 500 V, the input voltage of the equipment is already in an abnormal range. In this case, the equipment is very likely to be open-circuited. Therefore, the controller may switch the equipment to the high-level protection mode, that is, switch the power conversion apparatus in the equipment to the high-level protection mode.

In this embodiment of this application, the input voltage of the equipment may be understood as a voltage input to the equipment, and the rated voltage may be understood as an optimal voltage at which the equipment operates normally for a long time, and may also be referred to as a nominal voltage.

In the solution provided in this embodiment of this application, a relationship between the ratio of the current difference to the rated current and the first preset value is determined, and the power conversion apparatus is switched to the low-level protection mode or the high-level protection mode based on a determining result. This can ensure the normal operation of the power conversion apparatus as much as possible, and reduce the possibility of the avalanche breakdown of the power conversion apparatus.

In addition, in some possible implementations, the controller may alternatively compare the current difference with the second preset value, and switch the operating protection mode of the power conversion apparatus based on the comparison result. For example, if the current difference is less than the second preset value, the controller may switch the power conversion apparatus to the low-level protection mode. If the current difference is greater than or equal to the second preset value, the controller may switch the power conversion apparatus to the high-level protection mode. In some other possible implementations, the controller may alternatively compare the output current of the power conversion apparatus with the rated current, and switch the operating protection mode of the power conversion apparatus based on the comparison result. For example, if the output current of the power conversion apparatus is less than the rated current, the controller may switch the power conversion apparatus to the low-level protection mode. If the output current of the power conversion apparatus is greater than or equal to the rated current, the controller may switch the power conversion apparatus to the high-level protection mode.

As described above, the operating protection mode of the power conversion apparatus may be switched based on the voltage and the temperature. The following describes specific content of adjusting the power conversion apparatus from one protection mode to another protection mode.

(1) From the low-level protection mode to the high-level protection mode

Optionally, in some embodiments, the power conversion apparatus is in the low-level protection mode at a first moment.

The controller 230 is specifically configured to:

control, at a second moment, the output current of the power conversion apparatus to be less than or equal to the third current value, where a difference between the second moment and the first moment is a first difference; and

control, at a third moment, an overcurrent protection point of the power conversion apparatus to be the fourth current value, where a difference between the third moment and the first moment is a second difference, and the second difference is greater than the first difference.

In this embodiment of this application, if the power conversion apparatus is in the low-level protection mode at the first moment, when the controller intends to adjust the power conversion apparatus to the high-level protection mode, the controller may preferably adjust the maximum value of the output current of the power conversion apparatus to the third current value, and then adjust the overcurrent protection point of the power conversion apparatus to the fourth current value.

For example, it is assumed that the power conversion apparatus is in the low-level protection mode at the first moment, for example, 10:00:00. In this case, the maximum value of the output current of the power conversion apparatus is the first current value 40 A, and the overcurrent protection point of the power conversion apparatus is the second current value 60 A. When determining to switch the power conversion apparatus from the low-level protection mode to the high-level protection mode, the controller may control, at the second moment, the maximum value of the output current of the power conversion apparatus to be the third current value 20 A. It is assumed that the second moment is 10:00:02. The controller may further control, at the third moment, the overcurrent protection point of the power conversion apparatus to be the fourth current value 30 A. It is assumed that the second moment is 10:00:03. In this case, the first difference is 2, the second difference is 3, and the second difference is greater than the first difference. The controller may reduce the overcurrent protection point of the power conversion apparatus to the fourth current value 30 A after reducing the maximum value of the output current of the power conversion apparatus to the third current value 20 A. In other words, before the controller reduces the maximum value of the output current of the power conversion apparatus to the third current value 20 A, if the controller has reduced the overcurrent protection point of the power conversion apparatus to the fourth current value 30 A, when a current flowing through the power conversion apparatus exceeds 30 A, the protection apparatus performs an action to protect the power conversion apparatus. However, the maximum value of the output current of the power conversion apparatus can reach 40 A at this time. Because the controller has reduced the overcurrent protection point of the power conversion apparatus to the fourth current value 30 A, before the current flowing through the power conversion apparatus reaches 40 A, the power conversion apparatus is protected by the protection apparatus, resulting in a false protection action.

In the solution provided in this embodiment of this application, the second difference is greater than the first difference. To be specific, an action of the controller for controlling the overcurrent protection point of the power conversion apparatus to be the fourth current value lags behind an action of controlling the output current of the power conversion apparatus to be less than or equal to the third current value, or a moment at which the controller successfully controls the overcurrent protection point of the power conversion apparatus to be the fourth current value is later than a moment at which the controller successfully controls the output current of the power conversion apparatus to be less than or equal to the third current value. This can improve accuracy of protecting the power conversion apparatus.

(2) From the high-level protection mode to the low-level protection mode

Optionally, in some embodiments, the power conversion apparatus is in the high-level protection mode at a fourth moment.

The controller 230 is specifically configured to:

control, at a fifth moment, the output current of the power conversion apparatus to be less than or equal to the first current value, where a difference between the fifth moment and the fourth moment is a third difference; and

control, at a sixth moment, an overcurrent protection point of the power conversion apparatus to be the second current value, where a difference between the sixth moment and the fourth moment is a fourth difference, and the fourth difference is less than the third difference.

In this embodiment of this application, if the power conversion apparatus is in the high-level protection mode at the fourth moment, when the controller intends to adjust the power conversion apparatus to the low-level protection mode, the controller may preferably adjust the overcurrent protection point of the power conversion apparatus to the second current value, and then adjust the maximum value of the output current of the power conversion apparatus to the first current value.

For example, it is assumed that the power conversion apparatus is in the high-level protection mode at the fourth moment, for example, 12:00:00. In this case, the maximum value of the output current of the power conversion apparatus is the third current value 20 A, and the overcurrent protection point of the power conversion apparatus is the fourth current value 30 A. When determining to switch the power conversion apparatus from the high-level protection mode to the low-level protection mode, the controller 230 may control, at the fifth moment, the maximum value of the output current of the power conversion apparatus to be the first current value 40 A. It is assumed that the fifth moment is 12:00:03. The controller may further control, at the sixth moment, the overcurrent protection point of the power conversion apparatus to be the second current value 60 A. It is assumed that the sixth moment is 12:00:02. In this case, the third difference is 3, the fourth difference is 2, and the fourth difference is less than the third difference. The controller 230 may increase the maximum value of the output current of the power conversion apparatus to the first current value 40 A after increasing the overcurrent protection point of the power conversion apparatus to the second current value 60 A. In other words, before the controller increases the overcurrent protection point of the power conversion apparatus to the second current value 60 A, if the controller has increased the maximum value of the output current of the power conversion apparatus to the third current value 40 A, when a current flowing through the power conversion apparatus exceeds the fourth current value 30 A, the protection apparatus performs an action to protect the power conversion apparatus, although the protection apparatus is not expected to perform an action at this time. However, at this time, the controller has increased the maximum value of the output current of the power conversion apparatus to the third current value 40 A, but does not increase the overcurrent protection point of the power conversion apparatus to 60 A in time, resulting in a false protection action of the protection apparatus.

In the solution provided in this embodiment of this application, the fourth difference is less than the third difference. To be specific, an action of the controller for controlling the overcurrent protection point of the power conversion apparatus to be the second current value precedes an action of controlling the output current of the power conversion apparatus to be less than or equal to the first current value, or a moment at which the controller successfully controls the overcurrent protection point of the power conversion apparatus to be the second current value is earlier than a moment at which the controller successfully controls the output current of the power conversion apparatus to be less than or equal to the first current value. This can improve accuracy of protecting the power conversion apparatus.

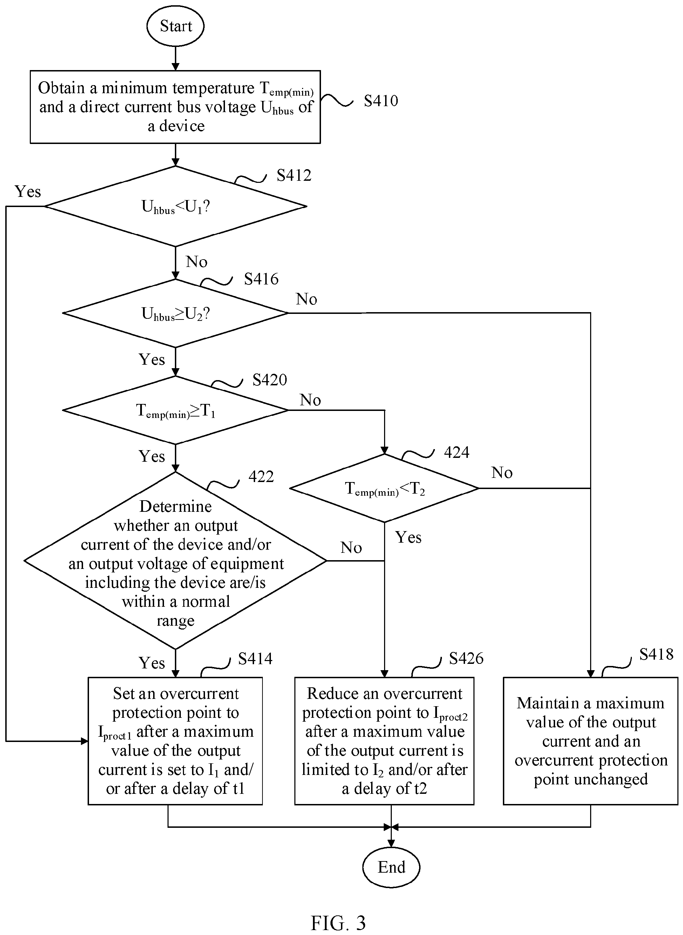

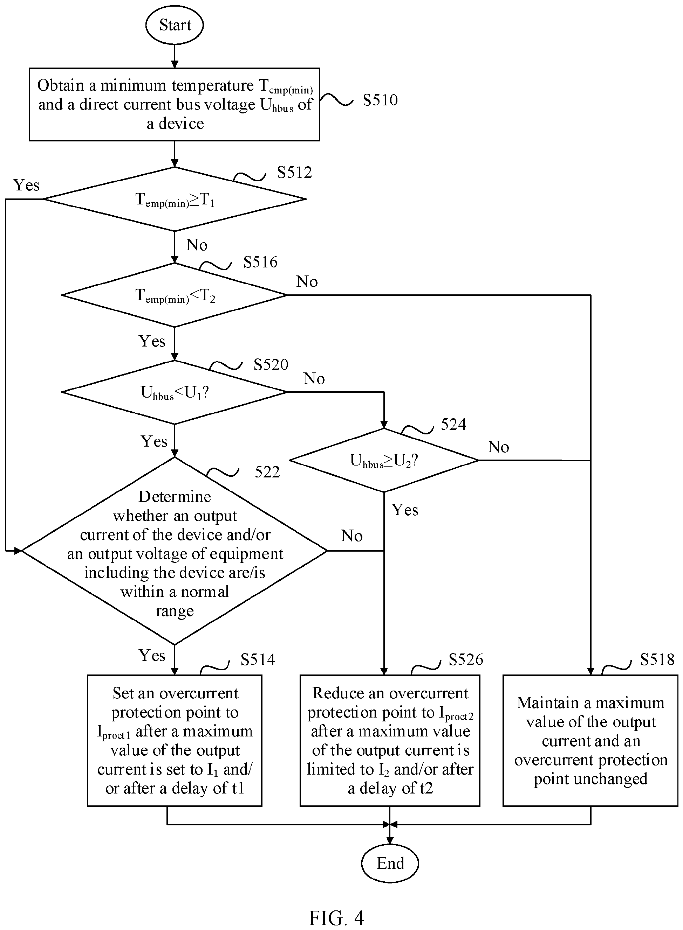

To make it easier to understand the solutions in this application, the following separately describes the solutions in the manner 1 and the manner 2 with reference to FIG. 3 and FIG. 4. Devices in FIG. 3 and FIG. 4 may be understood as the foregoing power conversion apparatus.

FIG. 3 is a schematic diagram of a device protection method according to this embodiment of this application. The method may include steps S410 to S426.

S410: Obtain a minimum temperature $T_{emp(min)}$ and a direct current bus voltage $U_{hbus}$ of a device.

In this embodiment of this application, the minimum temperature $T_{emp(min)}$ may be the temperature in the foregoing embodiment, and the direct current bus voltage $U_{hbus}$ may be the voltage in the foregoing embodiment.

It should be understood that the voltage in the foregoing embodiment is an input voltage of the device, and when the direct current bus voltage is input into the device, the input voltage of the device is the direct current bus voltage.

S412: $U_{hbus}<U_1$?

If $U_{hbus}<U_1$, step S414 is performed; or if $U_{hbus}\geq U_1$, step S416 is performed.

S416: $U_{hbus}\geq U_2$?

If $U_{hbus}\geq U_2$, step S420 is performed; or if $U_{hbus}<U_2$, step S418 is performed.

In this embodiment of this application, $U_1$ may be the first voltage threshold in the foregoing embodiment, and $U_2$ may be the second voltage threshold in the foregoing embodiment. If $U_{hbus}<U_1$, the following step S414 is performed; or if $U_{hbus}\geq U_1$, a relationship between $U_{hbus}$ and $U_2$ continues to be determined.

If $U_{hbus}<U_2$, the following step S418 is performed; or if $U_{hbus}\geq U_2$, a relationship between $T_{emp(min)}$ and a temperature threshold continues to be determined.

S420: $T_{emp(min)}\geq T_1$?

If $T_{emp(min)}\geq T_1$, step S422 is performed; or if $T_{emp(min)}<T_1$, step S424 is performed.

Step S422 is an optional step. In some possible implementations, if $T_{emp(min)}\geq T_1$, the following step S414 may alternatively be directly performed. This is not limited.

S422: Determine whether an output current of the device and/or an output voltage of equipment including the device are/is within a normal range.

If the output current and/or the output voltage are/is in the normal range, step S414 is performed; or if the output current and/or the output voltage are/is not in the normal range, step S426 is performed.

S414: Set an overcurrent protection point to $I_{proct1}$ after a maximum value of the output current is set to $I_1$ and/or after a delay of t1.

In some implementations, step S414 may be replaced with a step of setting the overcurrent protection point to $I_{proct1}$ after the output current is set to be less than or equal to $I_1$ and/or after the delay of t1.

S426: Reduce an overcurrent protection point to $I_{proct2}$ after a maximum value of the output current is limited to $I_2$ and/or after a delay of t2.

In some implementations, step S426 may be replaced with a step of reducing the overcurrent protection point to $I_{proct2}$ after the output current is limited to be less than or equal to $I_2$ and/or after the delay of t2.

S424: $T_{emp(min)}<T_2$?

If $T_{emp(min)}<T_2$, step S426 is performed; or if $T_{emp(min)}\geq T_2$, step S418 is performed.

S418: Maintain a maximum value of the output current and an overcurrent protection point unchanged.

In this embodiment of this application, $T_1$ may be the first temperature threshold in the foregoing embodiment, and $T_2$ may be the second temperature threshold in the foregoing embodiment. If $T_{emp(min)}\geq T_1$, it may be determined whether the output current of the device is within the normal range. If the output current is within the normal range, it indicates that the device operates normally at this time, and the device may be switched to a low-level protection mode. To be specific, the overcurrent protection point of the device is set to $I_{proct1}$ after the maximum value of the output current of the device is set to $I_1$ and/or after the delay of t1. If the output current is not within the normal range, it indicates that the device may be in a short-circuit state or an open-circuit state at this time, and the device may be switched to a high-level protection mode. To be specific, the overcurrent protection point is reduced to $I_{proct2}$ after the maximum value of the output current of the device is limited to $I_2$ and/or after the delay of t2. Obviously, $I_1>I_2$, and $I_{proct1}>I_{proct2}$. If $T_{emp(min)}<T_1$, a relationship between $T_{emp(min)}$ and the second temperature threshold $T_2$ may continue to be determined. If $T_{emp(min)}<T_2$, a temperature of the device is extremely low, and a breakdown voltage of the device is also extremely low. In this case, the device is easily broken down. Therefore, the overcurrent protection point may be reduced to $I_{proct2}$ after the maximum value of the output current of the device is limited to $I_2$ and/or after the delay of t2. If $T_{emp(min)}\geq T_2$, a temperature of the device is extremely low, but is not enough to pose a threat to safety of the device. In this case, the maximum value of the output current and the overcurrent protection point may remain unchanged. To be specific, if the maximum value of the output current is $I_1$ and the overcurrent protection point is $I_{proct1}$ at a previous moment, the maximum value of the output current may continue to be $I_1$, and the overcurrent protection point may continue to be $I_{proct1}$. If the maximum value of the output current is $I_2$ and the overcurrent protection point is $I_{proct2}$ at a previous moment, the maximum value of the output current may continue to be $I_2$, and the overcurrent protection point may continue to be $I_{proct2}$.

In the solution provided in this embodiment of this application, it is determined, with reference to a plurality of factors, such as a voltage, a temperature, and a current, whether the device is in a state in which avalanche breakdown is easy to occur, and an operating protection mode of the device is further switched based on the state, so that operating conditions are covered more comprehensively. This can reduce a possibility of the avalanche breakdown of the device, so that a possibility of an operation failure of the device can be reduced. In addition, when it is determined that the device is in a state in which avalanche breakdown is easy to occur, the device may be protected by adjusting the maximum value of the output current and the overcurrent protection point of the device. The solution in this application can improve flexibility of device protection, compared with a solution of switching off the device when it is determined that the device is in a state in which avalanche breakdown is easy to occur in the conventional technology. In addition, in this embodiment of this application, protection for the device is further considered when the device is at different temperatures, especially when the device is at a low temperature. The solution in this application can reduce impact of the temperature on breaking down the device, and help protect the device.

FIG. 4 is a schematic diagram of a device protection method according to this embodiment of this application. The method may include steps S510 to S526.

S510: Obtain a minimum temperature $T_{emp(min)}$ and a direct current bus voltage $U_{hbus}$ of a device.
S512: $T_{emp(min)}\geq T_1$?

If $T_{emp(min)}\geq T_1$, step S522 is performed; or if $T_{emp(min)}<T_1$, step S516 is performed.

S516: $T_{emp(min)}<T_2$?

If $T_{emp(min)}<T_2$, step S520 is performed; or if $T_{emp(min)}\geq T_2$, step S518 is performed.
S520: $U_{hbus}<U_1$?

If $U_{hbus}<U_1$, step S522 is performed; or if $U_{hbus}\geq U_1$, step S524 is performed.

Step S522 is an optional step. In some possible implementations, if $U_{hbus}<U_1$, the following step S514 may alternatively be directly performed. This is not limited.

S522: Determine whether an output current of the device and/or an output voltage of equipment including the device are/is within a normal range.

If the output current and/or the output voltage are/is in the normal range, step S514 is performed; or if the output current and/or the output voltage are/is not in the normal range, step S526 is performed.

S514: Set an overcurrent protection point to $I_{proct1}$ after a maximum value of the output current is set to $I_1$ and/or after a delay of t1.

In some implementations, step S514 may be replaced with a step of setting the overcurrent protection point to $I_{proct1}$ after the output current is set to be less than or equal to $I_1$ and/or after the delay of t1.

S526: Reduce an overcurrent protection point to $I_{proct2}$ after a maximum value of the output current is limited to $I_2$ and/or after a delay of t2.

In some implementations, step S526 may be replaced with a step of reducing the overcurrent protection point to $I_{proct2}$ after the output current is limited to be less than or equal to $I_2$ and/or after the delay of t2.
S524: $U_{hbus}\geq U_2$?

If $U_{hbus}\geq U_2$, step S526 is performed; or if $U_{hbus}<U_2$, step S518 is performed.

S518: Maintain a maximum value of the output current and an overcurrent protection point unchanged.

In some embodiments, in step S516, if it is determined that $T_{emp(min)}<T_2$, step S526 may alternatively be performed. This is not limited.

In the solution provided in this embodiment of this application, it is determined, with reference to a plurality of factors, such as a voltage, a temperature, and a current, whether the device is in a state in which avalanche breakdown is easy to occur, and an operating protection mode of the device is further switched based on the state, so that operating conditions are covered more comprehensively. This can reduce a possibility of the avalanche breakdown of the device, so that a possibility of an operation failure of the device can be reduced. In addition, when it is determined that the device is in a state in which avalanche breakdown is easy to occur, the device may be protected by adjusting the maximum value of the output current and the overcurrent protection point of the device. The solution in this application can improve flexibility of device protection, compared with a solution of switching off the device when it is determined that the device is in a state in which avalanche breakdown is easy to occur in the conventional technology. In addition, in this embodiment of this application, protection for the device is further considered when the device is at different temperatures, especially when the device is at a low temperature. The solution in this application can reduce impact of the temperature on breaking down the device, and help protect the device.

Optionally, in some embodiments, the controller 230 is further configured to:

determine whether high voltage ride-through or low voltage ride-through occurs on a power grid connected to the power conversion apparatus;

if the high voltage ride-through or the low voltage ride-through occurs on the power grid, determine whether the power conversion apparatus has a capability of outputting the first current value, where the first current value is a maximum value of the output current of the power conversion apparatus; and when the power conversion apparatus has the capability of outputting the first current value, control the power conversion apparatus to input the first current value to the power grid.

In this embodiment of this application, when the high voltage ride-through or the low voltage ride-through occurs on the power grid connected to the power conversion apparatus, that is, when a voltage at an alternating current outlet side of a converter rises or dips due to an accident or disturbance in an electric power system, within a specific abrupt voltage change range and a time interval, the power conversion apparatus can ensure continuous operation without disconnecting from the grid. In this case, the power grid may require a large current. If the power conversion apparatus can provide the power grid with the current required by the power grid, the controller 230 may control the power conversion apparatus to input the first current value to the power grid. In addition, if the power conversion apparatus cannot provide the power grid with the current required by the power grid, the operating protection mode of the power conversion apparatus may be switched based on the temperature and the voltage of the power conversion apparatus. In the solution provided in this embodiment of this application, if it is determined that the high voltage ride-through or the low voltage ride-through occurs on the power grid connected to the power conversion apparatus, when the power conversion apparatus has the capability of outputting the first current value, the power conversion apparatus is controlled to input the first current value to the power grid, so that a required current can be provided for the power grid, to ensure safety of the power grid.

Optionally, in some embodiments, when the power conversion apparatus has the capability of outputting the first current value, if the overcurrent protection point of the power conversion apparatus is the fourth current value, the controller 230 is further configured to:
control the overcurrent protection point of the power conversion apparatus to be the second current value, where the second current value is greater than the fourth current value, and the second current value is greater than the first current value.

In this embodiment of this application, when the power conversion apparatus has the capability of outputting the first current value, if the overcurrent protection point of the power conversion apparatus is the fourth current value, the controller 230 can timely control the overcurrent protection point of the power conversion apparatus to be increased to the second current value. In other words, if the overcurrent protection point of the power conversion apparatus is not increased to the second current value, the protection apparatus may perform a false protection action on the power conversion apparatus.

For example, it is assumed that the overcurrent protection point of the power conversion apparatus is reduced to 30 A. When the power conversion apparatus has the capability of outputting the first current value and the controller 230 controls the output current of the power conversion apparatus to 40 A, if the overcurrent protection point of the power conversion apparatus is not timely increased, because the output current 40 A of the power conversion apparatus is greater than the overcurrent protection point 30 A, the protection apparatus starts to protect the power conversion apparatus. However, in this case, the power grid expects the power conversion apparatus to provide the current required by the power grid, that is, expects that the protection apparatus does not perform a protection action on the power conversion apparatus. Therefore, in this case, the controller 230 may timely increase the overcurrent protection point of the power conversion apparatus, to avoid a false protection action of the protection apparatus.

In the solution provided in this embodiment of this application, when the power conversion apparatus has the capability of outputting the first current value, if the overcurrent protection point of the power conversion apparatus is the fourth current value, the controller can control the overcurrent protection point of the power conversion apparatus to be the second current value, where the second current value is greater than the fourth current value. This adjustment can ensure the required current of the power grid, and prevent the protection apparatus from performing the false protection action on the power conversion apparatus.

In this embodiment of this application, an action of determining whether high and low voltage ride-through (including the high voltage ride-through or the low voltage ride-through) occurs on the power grid connected to the power conversion apparatus may be performed after any step in FIG. 3 or FIG. 4. This is not limited.

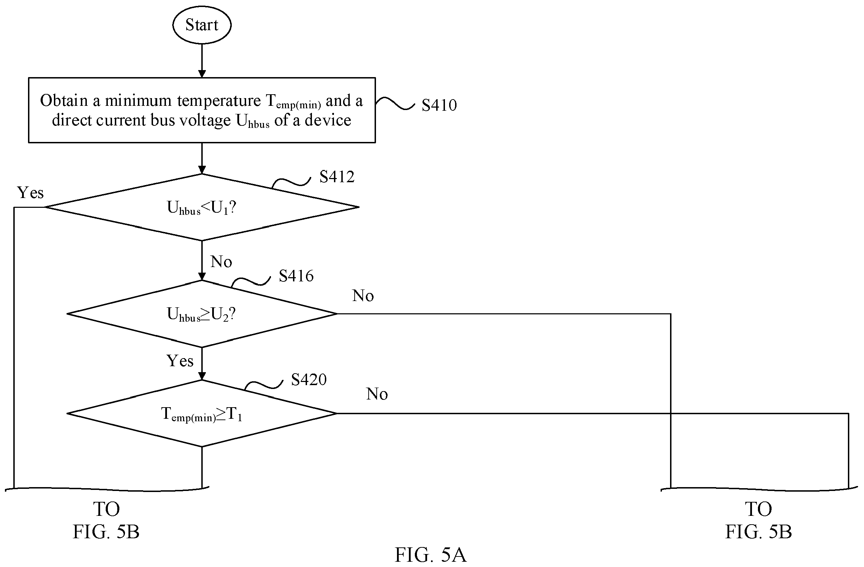

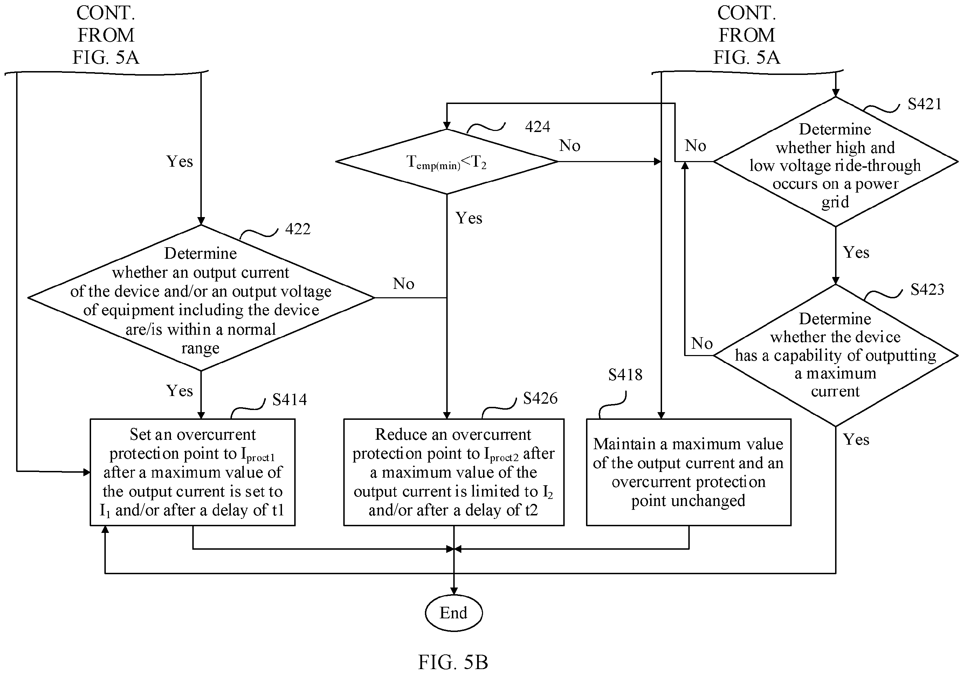

By using FIG. 5A to FIG. 6B as an example, the following separately describe a specific process in which an action of determining whether the high and low voltage ride-through occurs on the power grid connected to the device (the device may be understood as the power conversion apparatus described above) is performed after different steps. In FIG. 5A to FIG. 6B, this step is added according to the method shown in FIG. 3. The method shown in FIG. 4 is similar to that shown in FIG. 3, and is not further described. FIG. 5A and FIG. 5B are a schematic diagram of another device protection method according to this embodiment of this application.

S410: Obtain a minimum temperature $T_{emp(min)}$ and a direct current bus voltage $U_{hbus}$ of a device.

S412: $U_{hbus} < U_1$?

If $U_{hbus} < U_1$, step S414 is performed; or if $U_{hbus} \geq U_1$, step S416 is performed.

S416: $U_{hbus} \geq U_2$?

If $U_{hbus} \geq U_2$, step S420 is performed; or if $U_{hbus} < U_2$, step S418 is performed.

S420: $T_{emp(min)} \geq T_1$?

If $T_{emp(min)} \geq T_1$, step S422 is performed; or if $T_{emp(min)} < T_1$, step S421 is performed.

S421: Determine whether the high and low voltage ride-through occurs on the power grid.

If the high and low voltage ride-through occurs, step S423 is performed; or if the high and low voltage ride-through does not occur, S424 is performed.

S423: Determine whether the device has a capability of outputting a maximum current.

In this embodiment of this application, whether the device has the capability of outputting a maximum current may be understood as whether the device has the capability of outputting the first current value.

If the device has the capability of outputting a maximum current, step S414 is performed; or if the device does not have the capability of outputting a maximum current, S424 is performed.

S422: Determine whether an output current of the device and/or an output voltage of equipment including the device are/is within a normal range.

If the output current and/or the output voltage are/is in the normal range, step S414 is performed; or if the output current and/or the output voltage are/is not in the normal range, step S426 is performed.

S414: Set an overcurrent protection point to $I_{proct1}$ after a maximum value of the output current is set to $I_1$ and/or after a delay of t1.

S426: Reduce an overcurrent protection point to $I_{proct2}$ after a maximum value of the output current is limited to $I_2$ and/or after a delay of t2.

S424: $T_{emp(min)} < T_2$?

If $T_{emp(min)} < T_2$, step S426 is performed; or if $T_{emp(min)} \geq T_2$, step S418 is performed.

S418: Maintain a maximum value of the output current and an overcurrent protection point unchanged.

In this embodiment of this application, if $U_{hbus} \geq U_2$, and $T_{emp(min)} < T_1$, the controller may first determine whether the high and low voltage ride-through occurs on the power grid. If the high and low voltage ride-through does not occur on the power grid, a relationship between $T_{emp(min)}$ and the second temperature threshold $T_2$ may continue to be determined. If the high and low voltage ride-through occurs on the power grid, whether the device has the capability of outputting a maximum current may be further determined. If the device has the capability of outputting a maximum current, the overcurrent protection point of the device may be set to $I_{proct1}$ after the maximum value of the output current of the device is set to $I_1$ and/or after the delay of t1. If the device does not have the capability of outputting a maximum current, a relationship between $T_{emp(min)}$ and the second temperature threshold $T_2$ may continue to be determined.

For other steps in this embodiment, refer to related content in FIG. 3. Details are not described herein again.

In the solution provided in this embodiment of this application, when determining that the direct current bus voltage is greater than or equal to $U_2$ and a temperature of the device is less than $T_1$, the controller temporarily does not determine a relationship between the temperature of the device and $T_2$, but may first determine whether the high and low voltage ride-through occurs on the power grid. In a case in which the high and low voltage ride-through occurs on the power grid, if the device has the capability of outputting a maximum current, the maximum value of the output current of the device is controlled to be $I_1$ and/or the overcurrent protection point of the device is controlled to be $I_{proct1}$. If the device does not have the capability of outputting a maximum current, the relationship between the temperature of the device and $T_2$ continues to be determined, and the maximum value of the output current of the device is controlled based on the determining result. In the solution provided in this embodiment of this application, when the device is in a state in which avalanche breakdown may occur, whether the high and low voltage ride-through occurs on the power grid connected to the device is preferably determined, and a corresponding operation is performed based on a determining result. This can meet a requirement of the power grid, and reduce a possibility of avalanche breakdown of the device.

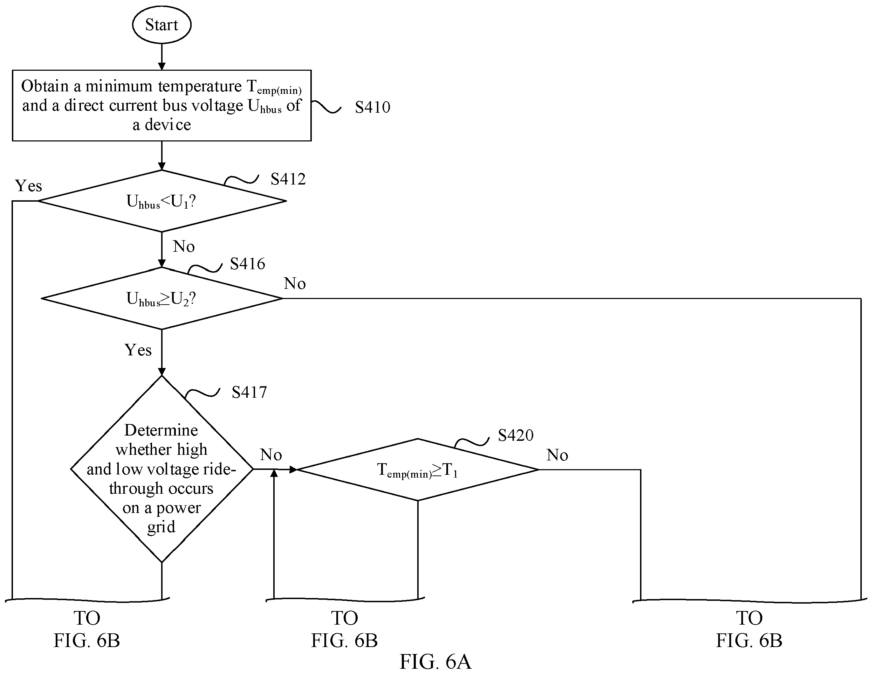

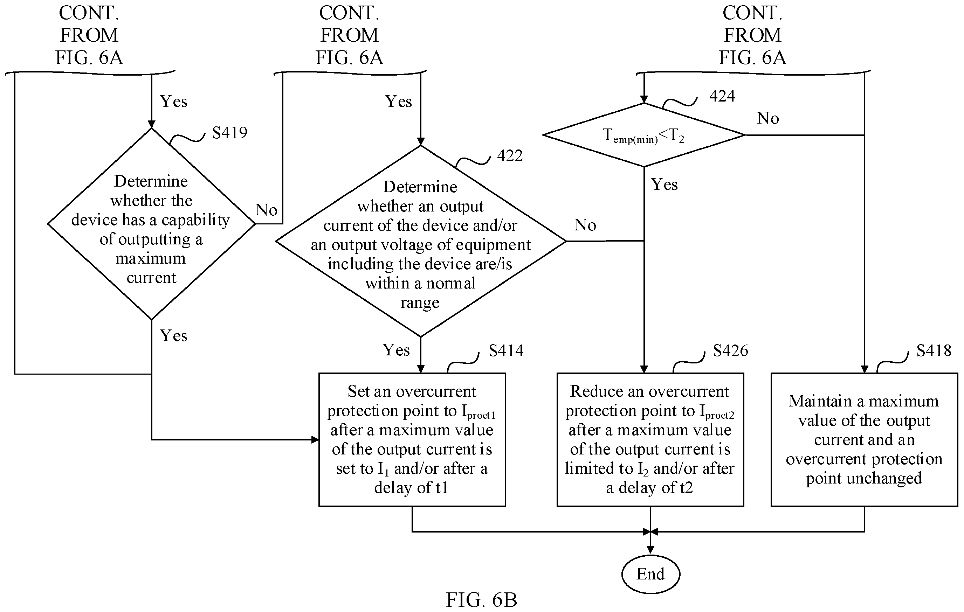

FIG. 6A and FIG. 6B are a schematic diagram of another device protection method according to this embodiment of this application.

S410: Obtain a minimum temperature $T_{emp(min)}$ and a direct current bus voltage $U_{hbus}$ of a device.

S412: $U_{hbus} < U_1$?

If $U_{hbus} < U_1$, step S414 is performed; or if $U_{hbus} \geq U_1$, step S416 is performed.

S416: $U_{hbus} \geq U_2$?

If $U_{hbus} \geq U_2$, step S417 is performed; or if $U_{hbus} < U_2$, step S418 is performed.

S417: Determine whether the high and low voltage ride-through occurs on the power grid.

If the high and low voltage ride-through occurs, S419 is performed; or if the high and low voltage ride-through does not occur, S420 is performed.

S419: Determine whether the device has a capability of outputting a maximum current.

If the device has the capability of outputting a maximum current, step S414 is performed; or if the device does not have the capability of outputting a maximum current, S420 is performed.

S420: $T_{emp(min)} \geq T_1$?

If $T_{emp(min)} \geq T_1$, step S422 is performed; or if $T_{emp(mm)} < T_1$, step S424 is performed.

S422: Determine whether an output current of the device and/or an output voltage of equipment including the device are/is within a normal range.

If the output current and/or the output voltage are/is in the normal range, step S414 is performed; or if the output current and/or the output voltage are/is not in the normal range, step S426 is performed.

S414: Set an overcurrent protection point to $I_{proct1}$ after a maximum value of the output current is set to $I_1$ and/or after a delay of t1.

S426: Reduce an overcurrent protection point to $I_{proct2}$ after a maximum value of the output current is limited to $I_2$ and/or after a delay of t2.

S424: $T_{emp(min)} < T_2$?

If $T_{emp(min)} < T_2$, step S426 is performed; or if $T_{emp(min)} \geq T_2$, step S418 is performed.

S418: Maintain a maximum value of the output current and an overcurrent protection point unchanged.

In this embodiment of this application, if $U_{hbus} \geq U_1$ and $U_{hbus} \geq U_2$, the controller may first determine whether the high and low voltage ride-through occurs on the power grid. If the high and low voltage ride-through does not occur on the power grid, a relationship between $T_{emp(min)}$ and a temperature threshold may continue to be determined. If the high and low voltage ride-through occurs on the power grid, whether the device has the capability of outputting a maximum current may be determined. If the device has the capability of outputting a maximum current, the overcurrent protection point of the device may be set to $I_{proct1}$ after the maximum value of the output current of the device is set to $I_1$ and/or after the delay of t1. If the device does not have the capability of outputting a maximum current, a relationship between $T_{emp(min)}$ and the first temperature threshold $T_1$ may continue to be determined.

For other steps in this embodiment, refer to related content in FIG. 3. Details are not described herein again.

In the solution provided in this embodiment of this application, when determining that the direct current bus voltage is greater than or equal to $U_2$, the controller temporarily does not determine a relationship between a temperature of the device and $T_1$, but may first determine whether the high and low voltage ride-through occurs on the power grid. In a case in which the high and low voltage ride-through occurs on the power grid, if the device has the capability of outputting a maximum current, the maximum value of the output current of the device is controlled to be $I_1$ and/or the overcurrent protection point of the device is controlled to be $I_{proct1}$. If the device does not have the capability of outputting a maximum current, the relationship between the temperature of the

device and $T_1$ continues to be determined, and the maximum value of the output current of the device is controlled based on a determining result. In the solution provided in this embodiment of this application, when the device is in a state in which avalanche breakdown may occur, whether the high and low voltage ride-through occurs on the power grid connected to the device is preferably determined, and a corresponding operation is performed based on a determining result. This can meet a requirement of the power grid, and reduce a possibility of avalanche breakdown of the device.

Optionally, in some embodiments, the controller 230 is specifically configured to:

determine a target temperature and a target voltage, where the target temperature is a minimum temperature in temperatures of a plurality of sub-power conversion apparatuses included in the power conversion apparatus, and the target voltage is an input voltage of the power conversion apparatus; and

switch the operating protection mode of the power conversion apparatus based on the target temperature and the target voltage.

For example, it is assumed that the sub-power conversion apparatus included in the power conversion apparatus includes an insulated gate bipolar transistor (insulated gate bipolar transistor, IGBT), a metal-oxide-semiconductor field-effect transistor (metal-oxide-semiconductor field-effect transistor, MOSFET), a switch, a heat sink, a board, and the like. If temperatures of the IGBT, the MOSFET, the switch, the heat sink, and the board are respectively 50°C, 60°C, 55°C, 70°C, and 55°C, the target temperature in this embodiment of this application is 50°C.

Certainly, in some possible implementations, the target temperature may alternatively be a temperature of any one of the plurality of sub-power conversion apparatuses. This is not limited.

It should be noted that the power conversion apparatus may be in a running state, or may be in a non-running state. In different states, sub-power conversion apparatuses corresponding to the obtained temperatures are different.

It is assumed that the power conversion apparatus is in the running state. The sub-power conversion apparatus included in the power conversion apparatus includes a power conversion apparatus in which a current flows, for example, the IGBT, the MOSFET, and the switch. In this case, if temperatures of the IGBT, the MOSFET, and the switch are respectively 50°C, 60°C, and 55°C, the target temperature may be 50°C in this embodiment of this application.

It is assumed that the power conversion apparatus is in the non-running state. The sub-power conversion apparatus included in the power conversion apparatus includes a power conversion apparatus in which no current flows, for example, the heat sink and the board.

In this case, if temperatures of the heat sink and the board are respectively 70°C and 55°C, the target temperature may be 55°C in this embodiment of this application.

It should be understood that, when the power conversion apparatus is in the running state, the target temperature in this embodiment of this application is a minimum temperature of the power conversion apparatus in which the current flows. As described above, the sub-power conversion apparatus included in the power conversion apparatus includes the power conversion apparatus in which the current flows, for example, the IGBT, the MOSFET, and the switch. In addition, the sub-power conversion apparatus may include the power conversion apparatus in which no current flows, for example, a diode. In this case, the target temperature is still the minimum temperature of power conversion apparatus in which the current flows, for example, the IGBT, the MOSFET, and the switch.

Generally, a lower temperature indicates a lower breakdown voltage of a semiconductor device; and a higher temperature indicates a higher breakdown voltage of the semiconductor device.

In this embodiment of this application, the target temperature is the minimum temperature in the temperatures of the plurality of sub-power conversion apparatuses. In this case, a determined breakdown voltage of the power conversion apparatus is the lowest, and the power conversion apparatus is easily broken down. When an operating voltage of the power conversion apparatus reaches the breakdown voltage, the power conversion apparatus can be immediately protected, so that the possibility of the avalanche breakdown of the power conversion apparatus can be reduced.

It is assumed that the target temperature is a higher temperature in the temperatures of the plurality of sub-power conversion apparatuses, for example, the target temperature is a temperature of a sub-power conversion apparatus 1. In this case, the determined breakdown voltage of the power conversion apparatus is higher, and the power conversion apparatus is not easily broken down. When an operating voltage of the power conversion apparatus does not reach the breakdown voltage, another sub-power conversion apparatus in the power conversion apparatus (the another sub-power conversion apparatus is a power conversion apparatus other than the sub-power conversion apparatus 1 in the power conversion apparatus) is about to be broken down. In this case, the power conversion apparatus should be protected. However, because the determined breakdown voltage is higher, when the breakdown voltage is not reached, the power conversion apparatus is not protected, which may cause the another sub-power conversion apparatus to be broken down.

In the solution provided in this embodiment of this application, the operating protection mode of the power conversion apparatus is switched based on the minimum temperature in the temperatures of the plurality of sub-power conversion apparatuses and the input voltage of the power conversion apparatus. This can improve accuracy of switching the operating protection mode of the power conversion apparatus.

It should be noted that values shown in the foregoing examples are merely examples, and may alternatively be other values. This should not constitute any limitation on this application.

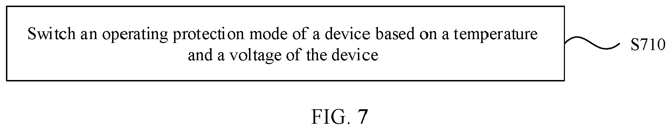

The following describes a device protection method provided in an embodiment of this application with reference to FIG. 7. It should be understood that descriptions of the method embodiment correspond to descriptions of the apparatus embodiment. Therefore, for content that is not described in detail, refer to the foregoing method embodiment. For brevity, details are not described again.

FIG. 7 is a schematic diagram of a device protection method according to an embodiment of this application. The method may include step S710.

S710: Switch an operating protection mode of a device based on a temperature and a voltage of the device, where the operating protection mode includes a low-level protection mode and a high-level protection mode.

In the low-level protection mode, an output current of the device is less than or equal to a first current value, an overcurrent protection current of the device is a second current value, or an output current of the device is less than or equal to a first current value and an overcurrent protection current of the device is a second current value.

In the high-level protection mode, an output current of the device is less than or equal to a third current value, an overcurrent protection current of the device is a fourth current value, or an output current of the device is less than or equal to a third current value and an overcurrent protection current of the device is a fourth current value, where the third current value is less than a first current value, and the fourth current value is less than a second current value. Optionally, in some embodiments, switching the operating protection mode of the device based on the temperature and the voltage of the device includes:

if the voltage is less than a first voltage threshold, switching the device to the low-level protection mode;
or
if the voltage is greater than or equal to a first voltage threshold, switching the operating protection mode of the device based on the voltage, a second voltage threshold, and the temperature, where the second voltage threshold is greater than the first voltage threshold.

Optionally, in some embodiments, switching the operating protection mode of the device based on the voltage, the second voltage threshold, and the temperature includes:

if the voltage is less than the second voltage threshold, maintaining the device in a present operating protection mode; or

if the voltage is greater than or equal to the second voltage threshold, switching the operating protection mode of the device based on the temperature, a first temperature threshold, a second temperature threshold, and the output current of the device.

Optionally, in some embodiments, switching the operating protection mode of the device based on the temperature, the first temperature threshold, the second temperature threshold, and the output current of the device includes:

if the temperature is less than the first temperature threshold, maintaining the device in the present operating protection mode or switching the device to the high-level protection mode based on the temperature and the second temperature threshold, where the second temperature threshold is less than the first temperature threshold; or

if the temperature is greater than or equal to the first temperature threshold, switching the device to the low-level protection mode or the high-level protection mode based on the output current of the device.

Optionally, in some embodiments, maintaining the device in the present operating protection mode or switching the device to the high-level protection mode based on the temperature and the second temperature threshold includes:

if the temperature is less than the second temperature threshold, switching the device to the high-level protection mode; or

if the temperature is greater than or equal to the second temperature threshold, maintaining the device in the present operating protection mode.

Optionally, in some embodiments, switching the operating protection mode of the device based on the temperature and the voltage of the device includes:

if the temperature is greater than or equal to a first temperature threshold, switching the device to the low-level protection mode or the high-level protection mode based on the output current of the device; or

if the temperature is less than a first temperature threshold, switching the operating protection mode of the device based on the temperature and a second temperature threshold, where the second temperature threshold is less than the first temperature threshold.

Optionally, in some embodiments, switching the operating protection mode of the device based on the temperature and the second temperature threshold includes:

if the temperature is less than the second temperature threshold, switching the operating protection mode of the device based on the voltage, a first voltage threshold, a second voltage threshold, and the output current of the device; or

if the temperature is greater than or equal to the second temperature threshold, maintaining the device in a present operating protection mode.

Optionally, in some embodiments, switching the operating protection mode of the device based on the voltage, the first voltage threshold, the second voltage threshold, and the output current of the device includes:

if the voltage is less than the first voltage threshold, switching the device to the low-level protection mode or the high-level protection mode based on the output current of the device; or

if the voltage is greater than or equal to the first voltage threshold, maintaining the device in the present operating protection mode or switching the device to the high-level protection mode based on the voltage and the second voltage threshold, where the second voltage threshold is greater than the first voltage threshold.

Optionally, in some embodiments, maintaining the device in the present operating protection mode or switching the device to the high-level protection mode based on the voltage and the second voltage threshold includes:

if the voltage is less than the second voltage threshold, maintaining the device in the present operating protection mode; or

if the voltage is greater than or equal to the second voltage threshold, switching the device to the high-level protection mode.

Optionally, in some embodiments, switching the device to the low-level protection mode or the high-level protection mode based on the output current of the device includes:

if a ratio of a current difference to a rated current is less than a first preset value, switching the device to the low-level protection mode, where the current difference is a difference between the output current of the device and the rated current; or

if a ratio of a current difference to a rated current is greater than or equal to a first preset value, switching the device to the high-level protection mode.

Optionally, in some embodiments, the device is in the low-level protection mode at a first moment.

Switching the operating protection mode of the device based on the temperature and the voltage of the device includes:

controlling, at a second moment, the output current of the device to be less than or equal to the third current value, where a difference between the second moment and the first moment is a first difference; and

controlling, at a third moment, an overcurrent protection point of the device to be the fourth current value, where a difference between the third moment and the first moment is a second difference, and the second difference is greater than the first difference.

Optionally, in some embodiments, the device is in the high-level protection mode at a fourth moment.

Switching the operating protection mode of the device based on the temperature and the voltage of the device includes:

controlling, at a fifth moment, the output current of the device to be less than or equal to the first current value, where a difference between the fifth moment and the fourth moment is a third difference; and

controlling, at a sixth moment, an overcurrent protection point of the device to be the second current value, where a difference between the sixth moment and the fourth moment is a fourth difference, and the fourth difference is less than the third difference.

Optionally, in some embodiments, the method further includes:

determining whether high voltage ride-through or low voltage ride-through occurs on a power grid connected to the device;

if the high voltage ride-through or the low voltage ride-through occurs on the power grid, determining whether the device has a capability of outputting the first current value, where the first current value is a maximum value of the output current of the device; and

when the device has the capability of outputting the first current value, controlling the device to input the first current value to the power grid.

Optionally, in some embodiments, when the device has the capability of outputting the first current value, if an overcurrent protection point of the device is the fourth current value, the method further includes:

controlling the overcurrent protection point of the device to be the second current value, where the second current value is greater than the fourth current value, and the second current value is greater than the first current value. Optionally, in some embodiments, switching the operating protection mode of the device based on the temperature and the voltage of the device includes:

determining a target temperature and a target voltage, where the target temperature is a minimum temperature in temperatures of a plurality of subdevices included in the device, and the target voltage is an input voltage of the device; and

switching the operating protection mode of the device based on the target temperature and the target voltage. It should be understood that the specific examples in the foregoing embodiments are merely intended to help a person skilled in the art better understand embodiments of this application, rather than to limit the scope of embodiments of this application. It should be understood that sequence numbers of the foregoing processes do not mean a sequence of performing the processes. The sequence of performing the processes should be determined according to functions and internal logic of the processes, and should not be construed as any limitation on the implementation processes of the embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should be aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

An embodiment of this application further provides a computer-readable storage medium. The computer-readable storage medium stores computer instructions used to implement the method performed by the controller in the foregoing method embodiments.

For example, when a computer program is executed by a computer, a computer can implement the method performed by the controller in the foregoing method embodiments.

An embodiment of this application further provides a computer program product including instructions. When the instructions are executed by a computer, the computer is enabled to implement the method performed by the controller in the foregoing method embodiments.

For explanations and beneficial effect of related content of any one of the devices provided above, refer to the corresponding method embodiment provided above. Details are not described herein again.

A person of ordinary skill in the art may be aware that, in combination with the examples described in embodiments disclosed in this specification, units and steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to implement the solutions provided in this application. In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A power conversion apparatus, comprising a power conversion unit, a sampling unit, and a controller, wherein the power conversion unit is connected to the controller;

   the sampling unit is separately connected to the power conversion unit and the controller, and is configured to detect a temperature and a voltage of the power conversion apparatus;
   the controller is configured to switch an operating protection mode of the power conversion apparatus based on the temperature and the voltage of the power conversion apparatus, wherein the operating protection mode comprises a low-level protection mode and a high-level protection mode; and
   the controller is configured to: in the low-level protection mode, control an output current of the power conversion apparatus to be less than or equal to a first current value, control an overcurrent protection current of the power conversion apparatus to be a second current value, or control an output current of the power conversion apparatus to be less than or equal to a first current value and an overcurrent protection current of the power conversion apparatus to be a second current value; or

the controller is configured to: in the high-level protection mode, control an output current of the power conversion apparatus to be less than or equal to a third current value, control an overcurrent protection current of the power conversion apparatus to be a fourth current value, or control an output current of the power conversion apparatus to be less than or equal to a third current value and an overcurrent protection current of the power conversion apparatus to be a fourth current value, wherein the third current value is less than a first current value, and the fourth current value is less than a second current value.

2. The apparatus according to claim 1, wherein the controller is specifically configured to:

if the voltage is less than a first voltage threshold, switch the power conversion apparatus to the low-level protection mode; or
if the voltage is greater than or equal to a first voltage threshold, switch the operating protection mode of the power conversion apparatus based on the voltage, a second voltage threshold, and the temperature, wherein the second voltage threshold is greater than the first voltage threshold.

3. The apparatus according to claim 2, wherein the controller is specifically configured to:

if the voltage is less than the second voltage threshold, maintain the power conversion apparatus in a present operating protection mode; or
if the voltage is greater than or equal to the second voltage threshold, switch the operating protection mode of the power conversion apparatus based on the temperature, a first temperature threshold, a second temperature threshold, and the output current of the power conversion apparatus.

4. The apparatus according to claim 3, wherein the controller is specifically configured to:

if the temperature is less than the first temperature threshold, maintain the power conversion apparatus in the present operating protection mode or switch the power conversion apparatus to the high-level protection mode based on the temperature and the second temperature threshold, wherein the second temperature threshold is less than the first temperature threshold; or
if the temperature is greater than or equal to the first temperature threshold, switch the power conversion apparatus to the low-level protection mode or the high-level protection mode based on the output current of the power conversion apparatus.

5. The apparatus according to claim 4, wherein the controller is specifically configured to:

if the temperature is less than the second temperature threshold, switch the power conversion apparatus to the high-level protection mode; or
if the temperature is greater than or equal to the second temperature threshold, maintain the power conversion apparatus in the present operating protection mode.

6. The apparatus according to claim 1, wherein the controller is specifically configured to:

if the temperature is greater than or equal to a first temperature threshold, switch the power conversion apparatus to the low-level protection mode or the high-level protection mode based on the output current of the power conversion apparatus; or
if the temperature is less than a first temperature threshold, switch the operating protection mode of the power conversion apparatus based on the temperature and a second temperature threshold, wherein the second temperature threshold is less than the first temperature threshold.

7. The apparatus according to claim 6, wherein the controller is specifically configured to:

if the temperature is less than the second temperature threshold, switch the operating protection mode of the power conversion apparatus based on the voltage, a first voltage threshold, a second voltage threshold, and the output current of the power conversion apparatus; or
if the temperature is greater than or equal to the second temperature threshold, maintain the power conversion apparatus in a present operating protection mode.

8. The apparatus according to claim 7, wherein the controller is specifically configured to:

if the voltage is less than the first voltage threshold, switch the power conversion apparatus to the low-level protection mode or the high-level protection mode based on the output current of the power conversion apparatus; or
if the voltage is greater than or equal to the first voltage threshold, maintain the power conversion apparatus in the present operating protection mode or switch the power conversion apparatus to the high-level protection mode based on the voltage and the second voltage threshold, wherein the second voltage threshold is greater than the first voltage threshold, and controller is specifically configured to:

> if the voltage is less than the second voltage threshold, maintain the power conversion apparatus in the present operating protection mode; or
> if the voltage is greater than or equal to the second voltage threshold, switch the power conversion apparatus to the high-level protection mode.

9. The apparatus according to any one of claims 4 to 8, wherein that the controller is specifically configured to switch the power conversion apparatus to the low-level protection mode or the high-level protection mode based on the output current of the power conversion apparatus comprises:

> if a ratio of a current difference to a rated current is less than a first preset value, switching the power conversion apparatus to the low-level protection mode, wherein the current difference is a difference between the output current of the power conversion apparatus and the rated current; or
> if a ratio of a current difference to a rated current is greater than or equal to a first preset value, switching the power conversion apparatus to the high-level protection mode.

10. The apparatus according to any one of claims 1 to 9, wherein the power conversion apparatus is in the low-level protection mode at a first moment; and the controller is specifically configured to:

> control, at a second moment, the output current of the power conversion apparatus to be less than or equal to the third current value, wherein a difference between the second moment and the first moment is a first difference; and
> control, at a third moment, an overcurrent protection point of the power conversion apparatus to be the fourth current value, wherein a difference between the third moment and the first moment is a second difference, and the second difference is greater than the first difference, or
> wherein the power conversion apparatus is in the high-level protection mode at a fourth moment; and the controller is specifically configured to:
>
> > control, at a fifth moment, the output current of the power conversion apparatus to be less than or equal to the first current value, wherein a difference between the fifth moment and the fourth moment is a third difference; and
control, at a sixth moment, an overcurrent protection point of the power conversion apparatus to be the second current value, wherein a difference between the sixth moment and the fourth moment is a fourth difference, and the fourth difference is less than the third difference.

11. The apparatus according to any one of claims 1 to 10, wherein the controller is further configured to:

> determine whether high voltage ride-through or low voltage ride-through occurs on a power grid connected to the power conversion apparatus; if the high voltage ride-through or the low voltage ride-through occurs on the power grid, determine whether the power conversion apparatus has a capability of outputting the first current value, wherein the first current value is a maximum value of the output current of the power conversion apparatus; and
> when the power conversion apparatus has the capability of outputting the first current value, control the power conversion apparatus to input the first current value to the power grid, and when the power conversion apparatus has the capability of outputting the first current value, if the overcurrent protection point of the power conversion apparatus is the fourth current value, the controller is further configured to:
> control the overcurrent protection point of the power conversion apparatus to be the second current value, wherein the second current value is greater than the fourth current value, and the second current value is greater than the first current value.

12. The apparatus according to any one of claims 1 to 11, wherein the controller is specifically configured to:

> determine a target temperature and a target voltage, wherein the target temperature is a minimum temperature in temperatures of a plurality of sub-power conversion apparatuses comprised in the power conversion apparatus, and the target voltage is an input voltage of the power conversion apparatus; and
> switch the operating protection mode of the power conversion apparatus based on the target temperature and the target voltage.

13. A device protection method, comprising:

switching an operating protection mode of a device based on a temperature and a voltage of the device, wherein the operating protection mode comprises a low-level protection mode and a high-level protection mode; and

in the low-level protection mode, an output current of the device is less than or equal to a first current value, an overcurrent protection current of the device is a second current value, or an output current of the device is less than or equal to a first current value and an overcurrent protection current of the device is a second current value; or

in the high-level protection mode, an output current of the device is less than or equal to a third current value, an overcurrent protection current of the device is a fourth current value, or an output current of the device is less than or equal to a third current value and an overcurrent protection current of the device is a fourth current value, wherein the third current value is less than a first current value, and the fourth current value is less than a second current value.

14. The method according to claim 13, wherein the method further comprises:

determining whether high voltage ride-through or low voltage ride-through occurs on a power grid connected to the device; if the high voltage ride-through or the low voltage ride-through occurs on the power grid, determining whether the device has a capability of outputting the first current value, wherein the first current value is a maximum value of the output current of the device; and when the device has the capability of outputting the first current value, controlling the device to input the first current value to the power grid.

15. The method according to claim 13 or 14, wherein when the device has the capability of outputting the first current value, if an overcurrent protection point of the device is the fourth current value, the method further comprises:

controlling the overcurrent protection point of the device to be the second current value, wherein the second current value is greater than the fourth current value, and the second current value is greater than the first current value, and wherein the switching an operating protection mode of a device based on a temperature and a voltage of the device comprises:

determining a target temperature and a target voltage, wherein the target temperature is a minimum temperature in temperatures of a plurality of subdevices comprised in the device, and the target voltage is an input voltage of the device; and switching the operating protection mode of the device based on the target temperature and the target voltage.

Photovoltaic
module

Power
conversion
apparatus

Power grid

FIG. 1

200

Power conversion unit
210

Controller
230

Sampling unit
220

FIG. 2

Start

Obtain a minimum temperature $T_{emp(min)}$ and a direct current bus voltage $U_{hbus}$ of a device — S410

$U_{hbus} < U_1$? — S412

Yes → 

No

$U_{hbus} \geq U_2$? — S416

No →

Yes

$T_{emp(min)} \geq T_1$ — S420

No →

Yes

Determine whether an output current of the device and/or an output voltage of equipment including the device are/is within a normal range — 422

$T_{emp(min)} < T_2$ — 424

No →

Yes

No →

Set an overcurrent protection point to $I_{proct1}$ after a maximum value of the output current is set to $I_1$ and/or after a delay of t1 — S414

Reduce an overcurrent protection point to $I_{proct2}$ after a maximum value of the output current is limited to $I_2$ and/or after a delay of t2 — S426

Maintain a maximum value of the output current and an overcurrent protection point unchanged — S418

End

FIG. 3

Start

Obtain a minimum temperature $T_{emp(min)}$ and a direct current bus voltage $U_{hbus}$ of a device — S510

S512

$T_{emp(min)} \geq T_1$ — Yes

No

S516

$T_{emp(min)} < T_2$ — No

Yes

S520

$U_{hbus} < U_1$? — No

Yes

524

$U_{hbus} \geq U_2$? — No

522

Determine whether an output current of the device and/or an output voltage of equipment including the device are/is within a normal range — No

Yes

S514

Set an overcurrent protection point to $I_{proct1}$ after a maximum value of the output current is set to $I_1$ and/or after a delay of t1

S526

Reduce an overcurrent protection point to $I_{proct2}$ after a maximum value of the output current is limited to $I_2$ and/or after a delay of t2

S518

Maintain a maximum value of the output current and an overcurrent protection point unchanged

End

FIG. 4

Start

Obtain a minimum temperature $T_{emp(min)}$ and a direct current bus voltage $U_{hbus}$ of a device

S410

S412

Yes

$U_{hbus}<U_1$?

No

S416

$U_{hbus}\geq U_2$?

No

Yes

S420

$T_{emp(min)}\geq T_1$

No

TO
FIG. 5B

TO
FIG. 5B

FIG. 5A

EP 4 439 948 A1

424

$T_{emp(min)} < T_2$

No

Yes

No

S421

Determine
whether high and
low voltage ride-through
occurs on a power
grid

Yes

422

Yes

Determine
whether an output current
of the device and/or an output voltage
of equipment including the device
are/is within a normal
range

No

No

S423

Determine
whether the device
has a capability of outputting
a maximum
current

No

Yes

S414

S426

S418

Yes

Yes

Set an overcurrent
protection point to $I_{proct1}$
after a maximum value of
the output current is set to
$I_1$ and/or after a delay of t1

Reduce an overcurrent
protection point to $I_{proct2}$ after
a maximum value of the
output current is limited to $I_2$
and/or after a delay of t2

Maintain a maximum value
of the output current and an
overcurrent protection
point unchanged

End

FIG. 5B

Start

Obtain a minimum temperature $T_{emp(min)}$ and a direct current bus voltage $U_{hbus}$ of a device — S410

S412 — $U_{hbus} < U_1$? — Yes / No

S416 — $U_{hbus} \geq U_2$? — No / Yes

S417 — Determine whether high and low voltage ride-through occurs on a power grid — No

S420 — $T_{emp(min)} \geq T_1$ — No / No

TO FIG. 6B

TO FIG. 6B

TO FIG. 6B

FIG. 6A

FIG. 6B

Switch an operating protection mode of a device based on a temperature and a voltage of the device — S710

FIG. 7

Europäisches
Patentamt

European
Patent Office

Office européen
des brevets

# EUROPEAN SEARCH REPORT

**Application Number**

EP 24 16 6867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/212563 A1 (GEN ELECTRIC [US]) 7 November 2019 (2019-11-07) * figures 1-5 * * paragraph [0034] * * paragraph [0037] * * paragraph [0041] * * paragraph [0056] * * paragraph [0067] - paragraph [0068] * | 1-15 | INV. H02M1/00 H02M1/32 H02M7/48 |
| X | EP 2 915 231 B1 (GE ENERGY POWER CONVERSION TECHNOLOGY LTD [GB]) 19 January 2022 (2022-01-19) * figures 2-5 * * paragraph [0036] - paragraph [0037] * | 1-15 | |
| A | DE 10 2018 105683 A1 (WOODWARD KEMPEN GMBH [DE]) 12 September 2019 (2019-09-12) * figures 1, 5-8 * | 1-15 | |
| A | EP 3 324 509 A1 (HUAWEI TECH CO LTD [CN]) 23 May 2018 (2018-05-23) * figures 1, 5, 6 * | 1-15 | TECHNICAL FIELDS SEARCHED (IPC) |
| A | JP 6 967995 B2 (HITACHI LTD) 17 November 2021 (2021-11-17) * figure 6 * * paragraph [0044] * | 1-15 | H02M |

The present search report has been drawn up for all claims

| Place of search | Date of completion of the search | Examiner |
|---|---|---|
| The Hague | 5 August 2024 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 6867

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2024

| Patent document cited in search report | | Publication date | Patent family member(s) | | Publication date |
|---|---|---|---|---|---|
| WO 2019212563 | A1 | 07-11-2019 | EP | 3788705 A1 | 10-03-2021 |
| | | | WO | 2019212563 A1 | 07-11-2019 |
| EP 2915231 | B1 | 19-01-2022 | BR | 112015009714 A2 | 21-11-2018 |
| | | | CA | 2890145 A1 | 08-05-2014 |
| | | | CN | 103795034 A | 14-05-2014 |
| | | | EP | 2915231 A2 | 09-09-2015 |
| | | | ES | 2911328 T3 | 18-05-2022 |
| | | | US | 2015295488 A1 | 15-10-2015 |
| | | | WO | 2014070835 A2 | 08-05-2014 |
| DE 102018105683 | A1 | 12-09-2019 | NONE | | |
| EP 3324509 | A1 | 23-05-2018 | CN | 105098832 A | 25-11-2015 |
| | | | EP | 3324509 A1 | 23-05-2018 |
| | | | US | 2018166883 A1 | 14-06-2018 |
| | | | WO | 2017025022 A1 | 16-02-2017 |
| JP 6967995 | B2 | 17-11-2021 | CN | 111819785 A | 23-10-2020 |
| | | | JP | 6967995 B2 | 17-11-2021 |
| | | | JP | 2019149861 A | 05-09-2019 |
| | | | WO | 2019163236 A1 | 29-08-2019 |

EPO FORM P0459

For more details about this annex : see Official Journal of the European Patent Office, No. 12/82